# EUROPÄISCHE PATENTSCHRIFT

(11) **EP 1 516 768 B1**
(45) Veröffentlichungstag und Bekanntmachung des Hinweises auf die Patenterteilung: **17.04.2013**
(21) Anmeldenummer: 04021666.5
(22) Anmeldetag: 15.09.2004
(51) Int. Cl.: F16H 61/12, B60W 50/038

(54) **Verfahren zur Steuerung eines Kraftfahrzeug-Antriebsystems**
Control method of vehicle drive system
Procédé de commande d'un système de traction d'une automobile

(30) Priorität: 19.09.2003 DE 10343309
(43) Veröffentlichungstag der Anmeldung: 23.03.2005
(73) Patentinhaber: Schaeffler Technologies AG & Co. KG, 91074 Herzogenaurach (DE)
(72) Erfinder: Schweizer, Alexander, 75045 Walzbachtal-Jöhlingen (DE); Pollak, Burkhard, Dr., 77855 Achern (DE)

(56) Entgegenhaltungen:
- GB-A- 2 315 132
- US-A- 5 216 938
- US-A1- 2001 039 232
- US-B1- 6 456 917

## Beschreibung

Die Erfindung betrifft ein Verfahren mit den Merkmalen gemäß dem Oberbegriff von Anspruch 1 sowie eine Vorrichtung mit den Merkmalen gemäß dem Oberbegriff von Anspruch 17.

Bei modernen Kraftfahrzeugen mit einem automatisierten Getriebesystem, wie beispielsweise automatisiertes Schaltgetriebe (ASG) oder Parallelschaltgetriebe (PSG), wird eine Kommunikation bzw. Daten-Kommunikation bzw. Signal-Kommunikation zwischen einem elektronischen Motorsteuergerät und einem Elektronischen Getriebesteuergerät benötigt.

Bei diesen Systemen können kritische, insbesondere sicherheitskritische, Situationen auftreten. Dies ist beispielsweise bei einem Totalausfall des elektronischen Getriebesteuergeräts gegeben, der beispielsweise durch einen Prozessorausfall bedingt sein kann.

Das Dokument GB 2 315 132 A beschreibt ein Verfahren zur Steuerung des Drehmoments eines Antriebsmotors eines Kraftfahrzeugs mit Drehmomentwandler. Ein Getriebesteuergerät erzeugt Signale, die dem Motorsteuergerät signalisieren, dass ein ordnungsgemäßer Zustand vorliegt. Empfängt das Motorsteuergerät diese Signale nicht mehr, verhindert es eine Abgabe von Drehmoment durch den Antriebsmotor des Kraftfahrzeugs über einen vorgegebenen Wert hinaus. Dadurch wird das Risiko einer Getriebeschädigung durch zu hohes Drehmoment reduziert.

Die US 2001/0039232 A1 offenbart die Merkmale des Oberbegriffs des 1. Anspruchs insbesonbere die Begrenzung des Motordrehmoments einer Antriebseinheit, wenn das Motorsteuergerät keine oder unplausible oder Notfallsignale eines Getriebesteuergeräts empfängt.

Eine - zumindest der Anmelderin intern - bekannte Maßnahme, um in solchen Situationen das Auftreten von sicherheitskritischen Situationen bzw. sicherheitskritischem Verhalten zu vermeiden bzw. zu verringern, besteht in der Verwendung eines redundanten Prozessors. Ein solches System kann beispielsweise ein so genanntes ISM (Integrated-Safety-Monitoring-System) sein. Dabei ist ein zweiter Prozessor bzw. redundanter Prozessor vorgesehen, der beispielsweise weniger Leistungsfähigkeit als der Hauptprozessor hat. Der redundante Prozessor und der

Der Erfindung liegt die Aufgabe zugrunde, sicherheitskritische Situationen beim Betreiben eines Kraftfahrzeuges, welches ein elektronisches Steuergerät aufweist, mittels welchem zumindest ein Antriebsstrangbauteil angesteuert wird, insbesondere vorbeugend, entgegenzuwirken.

Die Aufgabe wird durch ein Verfahren mit den Merkmalen gemäß Anspruch 1 sowie eine Vorrichtung mit den Merkmalen gemäß Anspruch 17 gelöst.

Dazu wird ein Verfahren zur Steuerung eines Kraftfahrzeug-Antriebsstrangsystems, welches einen Antriebsstrang , in welchem eine Getriebeeinrichtung und eine Drehmomentübertragungseinrichtung angeordnet ist, aufweist, vorgeschlagen, wobei der Antriebsstrang mittels einer Brennkraftmaschine belastet werden kann, sowie ein elektronisches Motorsteuergerät zur Steuerung der Brennkraftmaschine und ein elektronische Getriebesteuergerät zum Steuern der Getriebeeinrichtung und/oder der Drehmomentübertragungseinrichtung , wobei das elektronische Motorsteuergerät mittels einer vorbestimmten Charakteristik ermittelt, ob es die Kommunikation mit dem elektronischen Getriebesteuergerät verloren hat, und wobei das elektronische Motorsteuergerät das maximal zulässige Motormoment begrenzt, wenn es feststellt, dass es die Kommunikation mit dem elektronischen Getriebesteuergerät verloren hat, wobei die Drehmomentübertragungseinheit als Kupplungseinrichtung ausgeführt ist und die Motormomentgrenze für das maximal zulässige Motormoment in Abhängigkeit von wenigstens einem Betriebskennwert des Kraftfahrzeugs ausgewählt oder bestimmt wird, und das maximal zulässige Motormoment gemäß dieser ausgewählten bzw. bestimmten Motormomentgrenze begrenzt wird.

Bevorzugt ist ferner, dass ermittelt wird, ob zwischen dem elektronischen Getriebesteuergerät und dem elektronischen Motorsteuergerät eine bzw. eine funktionsfähige Daten- bzw. Signal-Kommunikation gegeben ist, und / oder ermittelt wird, ob das elektronische Getriebesteuergerät eine Funktionsbeeinträchtigung aufweist, und / oder ermittelt wird, ob die Getriebeeinrichtung und / oder die Drehmomentübertragungseinrichtung eine Funktionsbeeinträchtigung aufweist, wobei das maximal zulässige Motormoment der Brennkraftmaschine begrenzt wird, wenn ermittelt wird, dass keine und / oder eine funktionsbeeinträchtigte Daten- bzw. Signal-Kommunikation zwischen dem elektronischen Getriebesteuergerät und dem elektronischen Motorsteuergerät gegeben ist, und / oder das maximal zulässige Motormoment der Brennkraftmaschine begrenzt wird, wenn ermittelt wird, dass das elektronische Getriebesteuergerät eine Funktionsbeeinträchtigung aufweist, und / oder das maximal zulässige Motormoment der Brennkraftmaschine begrenzt wird, wenn ermittelt wird, dass die Getriebeeinrichtung und / oder die Drehmomentübertragungseinrichtung eine Funktionsbeeinträchtigung aufweist.

Bevorzugt ist ferner, dass ermittelt wird, ob zwischen dem elektronischen Getriebesteuergerät und dem elektronischen Motorsteuergerät eine bzw. eine funktionsfähige Daten- bzw. Signal-Kommunikation gegeben ist, und / oder ermittelt wird, ob das elektronische Getriebesteuergerät eine Funktionsbeeinträchtigung aufweist, und / oder ermittelt wird, ob die Getriebeeinrichtung und / oder die Drehmomentübertragungseinrichtung eine Funktionsbeeinträchtigung aufweist, wobei die Brennkraftmaschine abgeschaltet wird, wenn ermittelt wird, dass keine und / oder eine funktionsbeeinträchtigte Daten- bzw. Signal-Kommunikation zwischen dem elektronischen Getriebesteuergerät und dem elektronischen Motorsteuergerät gegeben ist, und / oder die Brennkraftmaschine abgeschaltet wird, wenn ermittelt wird, dass das elektronische Getriebesteuergerät eine Funktionsbeeinträchtigung aufweist, und / oder die Brennkraftmaschine abgeschaltet wird, wenn ermittelt wird, dass in der Getriebeeinrichtung und / oder in der Drehmomentübertragungseinrichtung eine Funktionsbeeinträchtigung gegeben ist, und wenn jeweils zusätzlich festgestellt wird, dass die Bremse des Kraftfahrzeuges betätigt ist, und / oder, wenn jeweils zusätzlich festgestellt wird, dass die Fahrzeuggeschwindigkeit kleiner als eine vorbestimmte Grenzgeschwindigkeit ist, und / oder, wenn jeweils zusätzlich festgestellt wird, dass die Motordrehzahl kleiner als eine vorbestimmte Grenze ist, und / oder, wenn jeweils zusätzlich festgestellt wird, dass das Leerlaufreglermoment größer als ein vorbestimmter Grenzwert ist, und / oder, wenn jeweils zusätzlich festgestellt wird, dass ein vom Fahrer betätigbarer Wählhebel weder in der Parkstellung noch in der Neutralstellung steht.

Bevorzugt ist ferner, dass mittels des elektronischen Motorsteuergeräts ermittelt wird, ob zwischen dem elektronischen Getriebesteuergerät und dem elektronischen Motorsteuergerät eine bzw. eine funktionsfähige Daten- bzw. Signal-Kommunikation gegeben ist, und / oder mittels des elektronischen Motorsteuergeräts ermittelt wird, ob das elektronische Getriebesteuergerät eine Funktionsbeeinträchtigung aufweist, und / oder mittels des elektronischen Motorsteuergeräts ermittelt wird, ob die Getriebeeinrichtung und / oder die Drehmomentübertragungseinrichtung eine Funktionsbeeinträchtigung aufweist, und / oder mittels des elektronischen Motorsteuergeräts das maximal zulässige Motormoment begrenzt wird und / oder mittels des elektronischen Motorsteuergeräts die Brennkraftmaschine abgeschaltet wird.

Bevorzugt ist ferner, dass das elektronische Getriebesteuergerät bei gegebener und / oder funktionsfähiger Daten- bzw. Signal-Kommunikation zwischen dem elektronischen Getriebesteuergerät und dem elektronischen Motorsteuergerät und / oder bei gegebener Funktionsfähigkeit des elektronischen Getriebesteuergerät und / oder bei gegebener Funktionsfähigkeit der Signalübertragungsstrecke einen Lebendzähler in einer vorbestimmten Weise verändert, wobei das elektronische Motorsteuergerät ermittelt, ob der Lebendzähler in der vorbestimmten Weise verändert wird und dann, wenn der Lebendzähler nicht in der vorbestimmten Weise bzw. nicht korrekt verändert wird, feststellt, dass keine und / oder eine funktionsbeeinträchtigte Daten- bzw. Signal-Kommunikation zwischen dem elektronischen Getriebesteuergerät und dem elektronischen Motorsteuergerät gegeben ist und / oder feststellt, dass das elektronische Getriebesteuergerät und / oder die Signalübertragungsstrecke funktionsbeeinträchtigt, insbesondere ausgefallen, ist.

Ebenfalls bevorzugt ist, dass der Lebendzähler ein Signal ist, welches einen Zahlenwert repräsentiert und in vorbestimmten Zeitabständen vom elektronischen Getriebesteuergerät an ein CAN-Bus gesendet wird, wobei das jeweils folgende Signal gegenüber dem jeweils vorherigen in einer vorbestimmten Weise verändert ist, wobei das elektronische Motorsteuergerät ermittelt, ob dieses Signal in der vorbestimmten Weise verändert wird und bei Ausbleiben der Veränderung bzw. der gemäß der vorbestimmten Weise korrekten Veränderung feststellt, dass keine bzw. eine funktionsbeeinträchtigte Daten- bzw. Signal-Kommunikation zwischen dem elektronischen Getriebesteuergerät und dem elektronischen Motorsteuergerät gegeben ist und / oder feststellt, dass das elektronische Getriebesteuergerät und / oder die Signalübertragungsstrecke funktionsbeeinträchtigt, insbesondere ausgefallen, ist.

Bevorzugt ist ferner, dass ermittelt wird, ob das elektronische Getriebesteuergerät vorbestimmte Signale an ein CAN-Bus-System sendet, wobei dann, wenn festgestellt wird, dass elektronische Getriebesteuergerät diese vorbestimmten Signale nicht an ein CAN-Bus-System sendet, festgestellt wird, dass keine bzw. eine funktionsbeeinträchtigte Daten- bzw. Signal-Kommunikation zwischen dem elektronischen Getriebesteuergerät und dem elektronischen Motorsteuergerät gegeben ist, und / oder festgestellt wird, dass das elektronische Getriebesteuergerät ausgefallen ist und / oder die Signalübertragungsstrecke ausgefallen ist.

Bevorzugt ist ferner, dass das maximal zulässige Motormoment auf einen oberen Grenzwert, die Motordrehmomentgrenze, begrenzt wird, und dass genau eine Motordrehmomentgrenze zum Begrenzen des maximal zulässigen Motormoments vorgesehen ist.

Bevorzugt ist ferner, dass das maximal zulässige Motormoment auf einen oberen Grenzwert, die Motordrehmomentgrenze, begrenzt wird, und dass mehrere Motordrehmomentgrenzen zum Begrenzen des maximal zulässigen Motormoments vorgesehen sind.

Bevorzugt ist ferner, dass die Motormomentgrenze für das maximal zulässige Motormoment bzw. jede Motormomentgrenze für das maximal zulässige Motormoment ein konstanter Wert ist.

Bevorzugt ist auch, dass die Motormomentgrenze für das maximal zulässige Motormoment bzw. jede oder wenigstens eine Motormomentgrenze für das maximal zulässige Motormoment ein funktionaler Zusammenhang ist.

Bevorzugt ist auch, dass zum Begrenzen des maximal zulässigen Motormoments eine Motormomentgrenze für das maximal zulässige Motormoment aus einer Mehrzahl von vorgegebenen Motormomentgrenzen für das maximal zulässige Motormoment ausgewählt wird, und das maximal zulässige Motormoment gemäß dieser ausgewählten Motormomentgrenze begrenzt wird.

Bevorzugt ist auch, dass die Motormomentgrenze für das maximal zulässige Motormoment in Abhängigkeit von der Stellung eines Bauteils des Kraftfahrzeuges ist, dass vom Fahrer betätigt werden kann, ausgewählt oder bestimmt wird, und das maximal zulässige Motormoment gemäß dieser ausgewählten bzw. bestimmten Motormomentgrenze begrenzt wird.

Bevorzugt ist auch, dass die Motormomentgrenze für das maximal zulässige Motormoment in Abhängigkeit von der Stellung eines Fahrpedals des Kraftfahrzeuges ausgewählt oder bestimmt wird, und das maximal zulässige Motormoment gemäß dieser ausgewählten bzw. bestimmten Motormoment-Grenze begrenzt wird.

Bevorzugt ist auch, dass eine Betriebsbremse des Kraftfahrzeuges vorgesehen ist, die ein vorbestimmtes Bremsmoment erzeugen kann, und dass die Motormomentgrenze für das maximal zulässige Motormoment auf einen Wert gesetzt ist, der von diesem Bremsmoment abhängt.

Bevorzugt ist auch, dass die Motormomentgrenze für das maximal zulässige Motormoment auf einen Wert gesetzt ist, der kleiner oder gleich dem Quotienten aus dem von der Betriebsbremse erzeugbaren Bremsmoment und der im Antriebsstrang zwischen der Motorausgangswelle und den Antriebsachsen des Kraftfahrzeuges aktuell gegebenen und / oder maximal oder minimal einstellbaren Übersetzung ist. Bevorzugt ist auch, dass das elektronische Getriebesteuergerät wenigstens ein Signal aussendet, welches anzeigt, ob eine Funktionsbeeinträchtigung der Getriebeeinrichtung und / oder der Drehmomentübertragungseinrichtung gegeben ist, wobei das elektronische Motorsteuergerät zur Ermittlung, ob eine Funktionsbeeinträchtigung in der Drehmomentübertragungseinrichtung und / oder, Getriebeeinrichtung bzw. in der die Drehmomentübertragungseinrichtung und / oder Getriebeeinrichtung umfassenden Einheit gegeben ist, dieses Signal überwacht und feststellt, dass eine solche Funktionsbeeinträchtigung gegeben ist, wenn dieses Signal eine Funktionsbeeinträchtigung der Drehmomentübertragungseinrichtung und / oder Getriebeeinrichtung anzeigt.

Erfindungsgemäß wird auch eine Vorrichtung für ein Sicherheitssystem für ein Kraftfahrzeug vorgeschlagen, wobei diese Vorrichtung elektronische Signale empfangen, aussenden und verarbeiten kann und eine Speichereinrichtung aufweist, in welcher wenigstens ein Steuerungsprogramm gespeichert ist, welches ein Verfahren gemäß einem der vorangehenden Ansprüche steuert.

Bevorzugt ist auch, dass die Vorrichtung ein elektronisches Motorsteuergerät umfasst, und dieses elektronische Motorsteuergerät elektronische Signale empfangen, aussenden und verarbeiten kann und die Speichereinrichtung aufweist, in welcher wenigstens das Steuerungsprogramm gespeichert ist, welches ein oben ausgeführtes Verfahren steuert.

Erfindungsgemäß wird insbesondere ein Verfahren zur Steuerung eines Kraftfahrzeug-Antriebsstrangsystems vorgeschlagen, welches Kraftfahrzeug-Antriebsstrangsystem einen Antriebsstrang aufweist, sowie eine Brennkraftmaschine zum Antreiben dieses Antriebsstranges, und welches Kraftfahrzeug-Antriebsstrangsystem ferner ein elektronisches Motorsteuergerät aufweist, welches die Brennkraftmaschine steuert, sowie ein elektronisches Getriebesteuergerät zur Steuerung wenigstens einer im Antriebsstrang angeordneten Einrichtung, nämlich Drehmomentübertragungseinrichtung und / oder Getriebeeinrichtung, wobei das elektronische Motorsteuergerät einen Signalausgang aufweist, an welchen sich eine Signalübertragungstrecke anschließt, und wobei das elektronische Motorsteuergerät über diesen Signalausgang,und diese Signalübertragungstrecke zumindest bei gegebener Funktionsfähigkeit des elektronischen Motorsteuergeräts sowie der Signalübertragungsstrecke im Betrieb Signale aussendet, die vom elektronischen Motorsteuergerät erfasst werden können, und wobei das elektronische Motorsteuergerät anhand der vom elektronischen Motorsteuergerät tatsächlich erfassten Signale ermittelt, ob eine Funktionsbeeinträchtigung in der Einheit aus der im Antriebsstrang angeordneten Einrichtung, nämlich Drehmomentübertragungseinrichtung und / oder Getriebeeinrichtung, dem elektronischem Getriebesteuergerät und der Signalübertragungsstrecke gegeben ist, wobei das elektronische Motorsteuergerät das maximal zulässige Motormoment der Brennkraftmaschine begrenzt, wenn es eine Funktionsbeeinträchtigung ermittelt hat.

In einer bevorzugten Gestaltung ist vorgesehen, dass das elektronische Getriebesteuergerät, die Signale, die es aussendet, an ein CAN-Bus bzw. CAN-Bus-System sendet. Dabei ist besonders bevorzugt vorgesehen, das elektronische Motorsteuergerät solche Signal im CAN-Bus-System abfragen kann bzw. abfragt oder solche Signale an das elektronische Motorsteuergerät weitergeleitet werden. Auch eine direkte Signalverbindung zwischen dem elektronischen Getriebesteuergerät und dem elektronischen Motorsteuergerät ist bevorzugt.

Bevorzugt ist ferner, dass das elektronische Motorsteuergerät nur ermittelt, ob eine Funktionsbeeinträchtigung der im Antriebsstrang angeordneten Einrichtung, nämlich Drehmomentübertragungseinrichtung und / oder Getriebeeinrichtung, gegeben ist und bei detektierter Funktionsbeeinträchtigung das maximal zulässige Motormoment begrenzt.

Bevorzugt ist ferner, dass das elektronische Motorsteuergerät nur ermittelt, ob eine Funktionsbeeinträchtigung der - sofern gegeben - im Antriebsstrang angeordneten Drehmomentübertragungseinrichtung gegeben ist und bei detektierter Funktionsbeeinträchtigung das maximal zulässige Motormoment begrenzt.

Bevorzugt ist ferner, dass das elektronische Motorsteuergerät nur ermittelt, ob eine Funktionsbeeinträchtigung der im Antriebsstrang angeordneten Getriebeeinrichtung gegeben ist und bei detektierter Funktionsbeeinträchtigung das maximal zulässige Motormoment begrenzt.

Bevorzugt ist ferner, dass das elektronische Motorsteuergerät nur ermittelt, ob eine Funktionsbeeinträchtigung des elektronischen Getriebesteuergeräts gegeben ist und bei detektierter Funktionsbeeinträchtigung das maximal zulässige Motormoment begrenzt.

Bevorzugt ist ferner, dass das elektronische Motorsteuergerät nur ermittelt, ob eine Funktionsbeeinträchtigung der Kommunikation bzw. Datenkommunikation bzw. der Signalkommunikation zwischen dem elektronischen Motorsteuergerät und dem elektronischen Getriebesteuergerät bzw. der diese ermöglichenden Bauteile, wie beispielsweise elektronisches Getriebesteuergerät und Signalübertragungsstrecke, gegeben ist, und bei detektierter Funktionsbeeinträchtigung das maximal zulässige Motormoment begrenzt.

Dass das elektronische Motorsteuergerät anhand der vom elektronischen Motorsteuergerät tatsächlich erfassten Signale ermittelt, ob eine Funktionsbeeinträchtigung der genannten Art oder einer der oder mehrerer der genannten Arten gegeben ist, ist in einer bevorzugten Gestaltung so, dass das elektronische Motorsteuergerät bei dieser Ermittlung feststellen kann oder auch feststellen kann, dass es vorbestimmte Signale nicht erfasst. Dies kann beispielsweise so sein, dass das elektronische Motorsteuergerät ermittelt ob, das elektronische Getriebesteuergerät vorbestimmte Signale, wie beispielsweise Signale die Betriebskennwerte anzeigen oder Informationen über die Steuerungsaktivitäten des elektronischen Getriebesteuergeräts enthalten, auf CAN bzw. an das CAN-Bus-System gesendet hat, und dann, wenn es nicht feststellt, dass diese Signale vom elektronischen Getriebesteuergerät nicht auf CAN bzw. an das CAN-Bus-System gesendet wurden, oder innerhalb einer vorbestimmten Zeitperiode nicht gesendet wurden, feststellt, das Funktionsbeeinträchtigung gegeben ist bzw. das elektronische Getriebesteuergerät ausgefallen bzw. die Kommunikation bzw. Daten-Kommunikation bzw. Signal-Kommunikation zwischen dem elektronischen Getriebesteuergerät und dem elektronischen Motorsteuergerät ausgefallen bzw. funktionsbeeinträchtigt ist. Hierbei ist in bevorzugter Gestaltung vorgesehen sein, dass das elektronische Motorsteuergerät die entsprechenden Signale vom CAN-Bus einliest bzw. einzulesen versucht. Das Ermitteln "anhand" der tatsächlich erfassten Signale muss also nicht bedeuten, dass Signale tatsächlich das elektronische Motorsteuergerät erreicht haben bzw. dort eingelesen wurden bzw. die Menge der tatsächlich erfassten Signale eine von einer Leermenge verschiedene Menge ist; vielmehr ist bevorzugt vorgesehen, dass mittels bzw. anhand der erfassten Signale (auch) festgestellt werden kann, dass bzw. welche Signale nicht erfasst bzw. nicht in das elektronische Motorsteuergerät eingelesen wurden bzw. das elektronische Motorsteuergerät nicht erreicht haben, wobei in bevorzugter Gestaltung aus diesem Nicht-Erfassen bzw. Nicht-Einlesen bzw. Nicht-Erreichen auf das Vorliegen einer entsprechenden Funktionsbeeinträchtigung geschlossen wird.

Bevorzugt ist auch, dass das elektronische Motorsteuergerät anhand einer Signalinformation, die ein Signal aufweist, das das elektronische Motorsteuergerät tatsächlich erreicht hat bzw. von diesem erfasst wurde bzw. im elektronischen Motorsteuergerät eingelesen werden, ermittelt wird, ob eine Funktionsbeeinträchtigung gegeben ist. Beispielsweise kann vorgesehen sein, dass ein solches Signal ein vom elektronischen Getriebesteuergerät ausgesendetes Signal ist, welches anzeigt, ob eine und / oder welche Funktionsbeeinträchtigung in der Drehmomentübertragungseinrichtung gegeben ist; es kann beispielsweise auch vorgesehen sein, dass ein solches Signal ein vom elektronische Getriebesteuergerät ausgesendetes Signal ist, welches anzeigt, ob eine und / oder welche Funktionsbeeinträchtigung in der Kupplungseinrichtung gegeben ist; es kann beispielsweise auch vorgesehen sein, dass ein solches Signal ein Lebendzähler bzw. Lebendzählersignal bzw. Funktionssignal ist, dass bei gegebener Funktionsfähigkeit des elektronischen Getriebesteuergeräts und / oder der Signalübertragungsstrecke vom elektronische Getriebesteuergerät laufend, beispielsweise in Zeitabständen von 10 ms oder dgl., verändert wird, wobei die Veränderung beispielsweise so sein kann, dass dieses Signal einen Wert anzeigt und dieser Wert alle 10 ms in vorbestimmter Weise, beispielsweise um den Wert "eins" erhöht wird, und gegebenenfalls bei Erreichen eines Maximalwerts erneut von "null" zu zählen beginnt, und wobei das elektronische Motorsteuergerät dieses Signal - insbesondere laufend - einliest und überprüft, ob dieses Signal sich in der vorbestimmten Weise ändert, und bei ausbleibender Änderung der genannten Art darauf schließt, dass das elektronische Getriebesteuergerät ausgefallen ist, und / oder, dass dies Signalübertragungstrecke ausgefallen oder funktionsbeeinträchtigt ist. Auch die Kombination in beliebiger Art dieser Beispiele ist besonders bevorzugt.

Erfindungsgemäß wird ferner insbesondere ein Verfahren zur Steuerung eines Kraftfahrzeug-Antriebsstrangsystems vorgeschlagen, welches Kraftfahrzeug-Antriebsstrangsystem eine in einem Antriebsstrang angeordnete Getriebeeinrichtung aufweist und / oder wenigstens eine im Antriebsstrang angeordnete Drehmomentübertragungseinrichtung, wobei das Kraftfahrzeug-Antriebsstrangsystem ferner eine Brennkraftmaschine zum Antreiben des Antriebsstranges aufweist, sowie ein elektronisches Motorsteuergerät, welches die Brennkraftmaschine steuert, und ein elektronisches Getriebesteuergerät zum Steuerung der Getriebeeinrichtung und / oder der wenigstens einen Drehmomentübertragungseinrichtung, wobei ermittelt wird, ob zwischen dem elektronischen Getriebesteuergerät und dem elektronischen Motorsteuergerät eine bzw. eine funktionsfähige Daten- bzw. Signal-Kommunikation gegeben ist, und / oder ermittelt wird, ob das elektronische Getriebesteuergerät eine Funktionsbeeinträchtigung aufweist, und / oder ermittelt wird, ob die Getriebeeinrichtung und / oder die Drehmomentübertragungseinrichtung eine Funktionsbeeinträchtigung aufweist, wobei das maximal zulässige Motormoment der Brennkraftmaschine begrenzt wird, wenn ermittelt wird, dass keine und / oder eine wird, wenn ermittelt wird, dass keine und / oder eine funktionsbeeinträchtigte Daten- bzw. Signal-Kommunikation zwischen dem elektronischen Getriebesteuergerät und dem elektronischen Motorsteuergerät gegeben ist, und / oder das maximal zulässige Motormoment der Brennkraftmaschine begrenzt wird, wenn ermittelt wird, dass das elektronische Getriebesteuergerät eine Funktionsbeeinträchtigung aufweist, und / oder das maximal zulässige Motormoment der Brennkraftmaschine begrenzt wird, wenn ermittelt wird, dass die Getriebeeinrichtung und / oder die Drehmomentübertragungseinrichtung eine Funktionsbeeinträchtigung aufweist.

In einer bevorzugten Gestaltung wird das maximal zulässige Motormoment begrenzt, wenn festgestellt bzw. ermittelt wird, dass keine und / oder eine funktionsbeeinträchtigte Daten- bzw. Signal-Kommunikation zwischen dem elektronischen Getriebesteuergerät und dem elektronischen Motorsteuergerät gegeben ist.

In einer bevorzugten Gestaltung wird das maximal zulässige Motormoment begrenzt, wenn festgestellt bzw. ermittelt wird, dass elektronische Getriebesteuergeräte eine Funktionsbeeinträchtigung aufweist.

In einer bevorzugten Gestaltung wird das maximal zulässige Motormoment begrenzt, wenn festgestellt bzw. ermittelt wird, dass in der Getriebeeinrichtung und / oder in der Drehmomentübertragungseinrichtung eine Funktionsbeeinträchtigung gegeben ist.

Erfindungsgemäß wird ferner insbesondere ein Verfahren zur Steuerung eines Kraftfahrzeug-Antriebsstrangsystems vorgeschlagen, welches Kraftfahrzeug-Antriebsstrangsystem eine in einem Antriebsstrang angeordnete Getriebeeinrichtung aufweist und / oder wenigstens eine im Antriebsstrang angeordnete Drehmomentübertragungseinrichtung, wobei das Kraftfahrzeug-Antriebsstrangsystem ferner eine Brennkraftmaschine zum Antreiben des Antriebsstranges aufweist, sowie ein elektronisches Motorsteuergerät, welches die Brennkraftmaschine steuert, und ein elektronisches Getriebesteuergerät, welches die Getriebeeinrichtung und / oder die wenigstens eine Drehmomentübertragungseinrichtung steuert, wobei ermittelt wird, ob zwischen dem elektronischen Getriebesteuergerät, und dem elektronischen Motorsteuergerät eine bzw. eine funktionsfähige Daten- bzw. Signal-Kommunikation gegeben ist, und / oder ermittelt wird, ob das elektronische Getriebesteuergerät eine Funktionsbeeinträchtigung aufweist, und / oder ermittelt wird, ob die Getriebeeinrichtung und / oder die Drehmomentübertragungseinrichtung eine Funktionsbeeinträchtigung aufweist, wobei die Brennkraftmaschine abgeschaltet wird, wenn ermittelt wird, dass keine und / oder eine funktionsbeeinträchtigte Daten- bzw. Signal-Kommunikation zwischen dem elektronischen Getriebesteuergerät und dem elektronischen Motorsteuergerät gegeben ist, und / oder die Brennkraftmaschine abgeschaltet wird, wenn ermittelt wird, dass das elektronische Getriebesteuergerät eine Funktionsbeeinträchtigung aufweist, und / oder die Brennkraftmaschine abgeschaltet wird, wenn ermittelt wird, dass in der Getriebeeinrichtung und / oder in der Drehmomentübertragungseinrichtung eine Funktionsbeeinträchtigung gegeben ist, und wenn jeweils zusätzlich festgestellt wird, dass die Bremse des Kraftfahrzeuges betätigt ist, und / oder, wenn jeweils zusätzlich festgestellt wird, dass die Fahrzeuggeschwindigkeit kleiner als eine vorbestimmte Grenzgeschwindigkeit ist, und / oder, wenn jeweils zusätzlich festgestellt wird, dass die Motordrehzahl kleiner als eine vorbestimmte Grenze ist, und / oder, wenn jeweils zusätzlich festgestellt wird, dass das Leerlaufreglermoment größer als ein vorbestimmter Grenzwert ist, und / oder, wenn jeweils zusätzlich festgestellt wird, dass ein vom Fahrer betätigbarer Wählhebel weder in der Parkstellung noch in der Neutralstellung steht.

Nach dieser Gestaltung ist wird also die Brennkraftmaschine nicht bereits abgeschaltet, wenn festgestellt bzw. ermittelt wird, dass keine bzw. eine funktionsbeeinträchtigte Daten- bzw. Signal-Kommunikation zwischen dem elektronischen Getriebesteuergerät und dem elektronischen Motorsteuergerät gegeben ist, und / oder wenn festgestellt bzw. ermittelt wird, dass in der Getriebeeinrichtung und / oder in der Drehmomentübertragungseinrichtung eine Funktionsbeeinträchtigung gegeben ist, sondern, dann wenn zusätzlich festgestellt bzw. ermittelt wird, dass weitere Bedingungen erfüllt sind. Zur Vereinfachung der Darstellung werden diese zusätzlichen Bedingungen im folgenden als "zusätzliche Abschaltbedingungen" bezeichnet, wobei die Bedingung, dass "die Bremse des Kraftfahrzeuges betätigt ist" als "erste zusätzliche Abschaltbedingung" bezeichnet wird, wobei die Bedingung, dass "die Fahrzeuggeschwindigkeit kleiner als eine vorbestimmte Grenzgeschwindigkeit ist" als "zweite zusätzliche Abschaltbedingung" bezeichnet wird, wobei die Bedingung, dass "die Motordrehzahl kleiner als eine vorbestimmte Grenze ist" als "dritte zusätzliche Abschaltbedingung" bezeichnet wird, wobei die Bedingung, dass "das Leerlaufreglermoment größer als ein vorbestimmter Grenzwert ist" als "vierte zusätzliche Abschaltbedingung" bezeichnet wird, und wobei die Bedingung, dass "ein vom Fahrer betätigbarer Wählhebel weder in der Parkstellung noch in der Neutralstellung steht" als "fünfte zusätzliche Abschaltbedingung" bezeichnet wird.

In einer bevorzugten Gestaltung wird die Brennkraftmaschine abgeschaltet, wenn festgestellt bzw. ermittelt wird, dass keine bzw. eine funktionsbeeinträchtigte Daten- bzw. Signal-Kommunikation zwischen dem elektronischen Getriebesteuergerät und dem elektronischen Motorsteuergerät gegeben ist, und wenn ermittelt bzw. festgestellt wird, dass zusätzliche Abschaltbedingungen bzw. vorbestimmte zusätzliche Abschaltbedingungen erfüllt sind. Vorzugsweise wird die Brennkraftmaschine abgeschaltet, in dem sie sich selbst abschaltet.

In einer bevorzugten Gestaltung wird die Brennkraftmaschine abgeschaltet, wenn festgestellt bzw. ermittelt wird, dass elektronische Getriebesteuergerät eine Funktionsbeeinträchtigung aufweist, und wenn ermittelt bzw. festgestellt wird, dass zusätzliche Abschaltbedingungen bzw. vorbestimmte zusätzliche Abschaltbedingungen erfüllt sind.

In einer bevorzugten Gestaltung wird die Brennkraftmaschine abgeschaltet, wenn festgestellt bzw. ermittelt wird, dass in der Getriebeeinrichtung und / oder in der Drehmomentübertragungseinrichtung eine Funktionsbeeinträchtigung gegeben ist, und wenn ermittelt bzw. festgestellt wird, dass zusätzliche Abschaltbedingungen bzw. vorbestimmte zusätzliche Abschaltbedingungen erfüllt sind.

Die angesprochenen zusätzlichen Abschaltbedingungen sind in bevorzugten Gestaltungen jeweils eine Kombination der ersten bis fünften Abschattbedingungen, wie beispielsweise erste bis fünfte Abschaltbedingung oder erste bis vierte Abschaltbedingung oder erste bis dritte Abschaltbedingung oder erste und zweite Abschaltbedingung oder erste Abschaltbedingung oder zweite bis fünfte Abschaltbedingung oder zweite bis vierte Abschaltbedingung oder zweite und dritte Abschaltbedingung oder zweite Abschaltbedingung oder dritte bis fünfte Abschaltbedingung oder dritte und vierte Abschaltbedingung oder dritte Abschaltbedingung oder vierte und fünfte Abschaltbedingung oder vierte Abschaltbedingung oder fünfte Abschaltbedingung.

Erfindungsgemäß wird ferner insbesondere ein Verfahren zur Steuerung eines Kraftfahrzeug-Antriebsstrangsystems vorgeschlagen, welches einen Antriebsstrang aufweist, der mittels einer Brennkraftmaschine belastet werden kann, sowie ein elektronisches Motorsteuergerät zur Steuerung der Brennkraftmaschine und ein elektronische Getriebesteuergerät, wobei das elektronische Motorsteuergerät mittels einer vorbestimmten Charakteristik ermittelt, ob es die Kommunikation mit dem elektronischen Getriebesteuergerät verloren hat, und wobei das elektronische Motorsteuergerät das maximal zulässige Motormoment begrenzt, wenn es feststellt, dass es die Kommunikation mit dem elektronischen Getriebesteuergerät verloren hat. Alternativ kann auch vorgesehen sein, dass das elektronische Motorsteuergerät anstelle der auf die Kommunikation bezogenen Schritte mittels einer vorbestimmten Charakteristik ermittelt, ob das elektronische Getriebesteuergerät ausgefallen, wobei das elektronische Motorsteuergerät das maximal zulässige Motormoment begrenzt, wenn es feststellt, dass elektronische Getriebesteuergerät ausgefallen ist. Auch die Kombination beider Gestaltungen ist bevorzugt.

Bevorzugt wird schaltet sich bei dieser Gestaltung bzw. bei diesen Gestaltungen die Brennkraftmaschine selbst bzw. mittels des elektronischen Motorsteuergeräts ab, wenn das elektronische Motorsteuergerät feststellt, dass es die Kommunikation mit dem elektronischen Getriebesteuergerät verloren hat, und zusätzlich festgestellt wird, das die erwähnten zusätzlichen Abschaltbedingungen, die beispielsweise in den beispielhaft genannten Kombinationen verwendet werden, erfüllt sind. Die Kommunikation ist vorzugsweise eine Daten- bzw. Signalkommunikation.

Die bzw. eine im Antriebsstrang angeordneten Einrichtung, zu deren Ansteuerung das Getriebesteuergerät vorgesehen ist, weist vorzugsweise eine Drehmomentübertragungseinrichtung und / oder eine Getriebeeinrichtung auf oder ist eine solche.

Eine Drehmomentübenragungseinrichtung weist im Sinne der Erfindung vorzugsweise eine Kupplungseinrichtung auf oder ist eine Kupplungseinrichtung. Gemäß einer besonders bevorzugten Gestaltung weist die Drehmomentübertragungseinrichtung eine Anfahrkupplung des Kraftfahrzeugs auf, oder ist eine solche. Es können auch mehrere Anfahrkupplungen vorgesehen sein, zu deren Ansteuerung ein Getriebesteuergerät vorgesehen ist. Gemäß einer besonders bevorzugten Gestaltung ist die Kupplungseinrichtung bzw. die Anfahrkupplungseinrichtung als Reibungskupplungseinrichtung gestaltet. Die Drehmomentübertragungseinrichtung bzw. Kupplungseinrichtung bzw. Anfahrkupplungseinrichtung weist in besonders bevorzugter Gestaltung eine Betätigungseinrichtung auf, mittels welcher die Kupplung(seinrichtung) bzw. Drehmomentübertragungseinrichtung betätigt werden kann. Eine solche Betätigungseinrichtung, die auch als Kupplungsbetätigungseinrichtung bezeichnet wird, kann beispielsweise mechanische und / oder hydraulische und / oder pneumatische und / oder elektronische Komponenten aufweisen. Bevorzugt ist ferner, dass die Getriebeeinrichtung eine Betätigungseinrichtung aufweist, die auch als Getriebebetätigungseinrichtung bezeichnet wird, welche beispielsweise mechanische und / oder hydraulische und / oder pneumatische und / oder elektronische Komponenten aufweist. In besonders bevorzugter Gestaltung wird erfindungsgemäß ermittelt, ob die Kupplungsbetätigungseinrichtung und / oder die Getriebebetätigungseinrichtung eine Funktionsbeeinträchtigung aufweist, wenn ermittelt wird, ob die Drehmomentübertragungseinrichtung bzw. Kupplungseinrichtung bzw. Getriebeeinrichtung einer Funktionsbeeinträchtigung aufweist. Eine solche Funktionsbeeinträchtigung kann beispielsweise so sein, dass sich die Stellung der Kupplungsbetätigungseinrichtung bzw. der Getriebebetätigungseinrichtung nicht verändern lässt, was in bevorzugter Gestaltung vom elektronischen Getriebesteuergerät mittels eines Signals angezeigt wird.

Besonders bevorzugt ist vorgesehen, dass das elektronische Motorsteuergerät mittels einer solchen Signalinformation dann feststellt, dass die Kupplungseinrichtung bzw. die Getriebeeinrichtung funktionsbeeinträchtigt ist.

Eine Kupplungseinrichtung ist im Sinne der vorliegenden Erfindung vorzugsweise eine elektronisch gesteuerte Kupplungseinrichtung. Es kann in bevorzugter Gestaltung vorgesehen sein, dass die Anfahrkupplung bzw. die Anfahrkupplungen mittels des elektronischen Getriebesteuergeräts gesteuert werden.

Eine Funktionsbeeinträchtigung ist bevorzugter Gestaltung ein Ausfall. Eine Funktionsbeeinträchtigung ist bevorzugter Gestaltung eine Funktionsstörung Ausfall.

Es ist vorzugsweise vorgesehen, dass das Getriebesteuergerät vorbestimmte Signale aussendet, um seine Funktionsfähigkeit anzuzeigen, bzw. mittels solcher Signale seine Funktionsfähigkeit anzeigt. Solche Signale werden auch als Funktionssignale bezeichnet. Solche Funktionssignale können beispielsweise ein Signal bzw. Signale sein, das bzw. die sich in vorbestimmter Weise ändern bzw. vom Getriebesteuergerät verändert werden. Beispielsweise kann ein solches Signal eine Zahl repräsentieren und so verändert werden, dass sich diese Zahl ändert. Ein Beispiel hierfür ist so, dass - z.B. in vorbestimmten Zeitabständen - ein Funktionssignal bzw. Funktionssignale vom Getriebesteuergerät ausgesendet werden, die Zahlenwerte repräsentieren, die hoch- oder runtergezählt werden. So kann beispielsweise vorgesehen sein, dass alle 10 ms vom elektronischen Getriebesteuergerät ein solches Funktionssignal ausgesendet wird, das eine Zahl repräsentiert, wobei das jeweils folgende Funktionssignal gegenüber dem vorangehenden eine Zahl repräsentiert, die um "Eins" erhöht ist. Es kann auch vorgesehen sein, dass ein solches Hochzählen bis zu einem Maximalwert stattfindet und nach Erreichen des Maximalwerts wieder beim Startwert, der beispielsweise "Null" ist, gestartet wird.

In besonders bevorzugter Gestaltung sendet das elektronische Getriebesteuergerät solche Funktionssignale auf CAN bzw. an ein CAN-Bus-System.

Es ist in bevorzugter Gestaltung vorgesehen, dass - bevorzugt vom elektronischen Motorsteuergerät - ermittelt wird, ob diese Funktionssignale tatsächlich vom elektronischen Getriebesteuergerät bereitgestellt bzw. ausgesendet werden und / oder ob sie in der vorbestimmten Weise verändert werden. Sofern hierbei festgestellt wird, dass diese Signale nicht bzw. nicht in der vorbestimmten Weise ausgesendet bzw. bereitgestellt werden, wird vorzugsweise darauf geschlossen, dass die Daten- bzw. Signal-Kommunikation zwischen dem elektronischen Getriebesteuergerät und dem elektronischen Motorsteuergerät funktionsbeeinträchtigt bzw. ausgefallen ist, bzw. dass das elektronische Getriebesteuergerät und / oder die Signalübertragungsstrecke funktionsbeeinträchtigt und / oder ausgefallen ist. Es kann hierbei beispielsweise vorgesehen sein, dass das elektronische Getriebesteuergerät die Funktionssignale auf CAN bzw. an ein CAN-Bus-System sendet bzw. senden soll, und das elektronische Motorsteuergerät ermittelt, ob auf CAN bzw. in dem CAN-Bus-System diese Funktionssignale gegeben sind und / oder in der vorbestimmten Weise verändert werden, und - sofern dies nicht der Fall ist - darauf schließt, dass die Daten- bzw. Signal-Kommunikation zwischen dem elektronischen Getriebesteuergerät und dem elektronischen Motorsteuergerät ausgefallen bzw. funktionsbeeinträchtigt ist, bzw. dass das elektronische Getriebesteuergerät und / oder die Signalübertragungsstrecke funktionsbeeinträchtigt und / oder ausgefallen ist.

Gemäß einer besonders bevorzugten Gestaltung wird eine fehlende Kommunikation bzw. Daten- bzw. Signal-Kommunikation zwischen dem elektronischen Motorsteuergerät und dem elektronischen Getriebesteuergerät festgestellt, wenn festgestellt wird, dass ein Lebendzähler (alive counter) nicht bzw. nicht mehr korrekt durch das Getriebesteuergerät erhöht wird.

Besonders bevorzugt ist der Lebendzähler eine CAN-Mitteilung bzw. eine an das CAN-Bus-System gesendetes Signal, welches in einer vorbestimmten Weise verändert wird. Besonders bevorzugt wird dieses Signal bzw. diese Mitteilung vom elektronischen Getriebesteuergerät ausgesendet und verändert. Vorzugsweise repräsentiert das Signal bzw. die Mitteilung eine Zahl und wird so verändert, dass sich diese Zahl ändert. Gemäß einer besonders bevorzugten Gestaltung wird dieses Signal bzw. diese Mitteilung - bzw. die jeweils hierdurch repräsentierte Zahl - in vorbestimmten, beispielsweise konstanten, Zeitabständen um einen vorbestimmten Wert verändert, der beispielsweise konstant sein kann. Es kann insbesondere vorgesehen sein, dass die Zahl in vorbestimmten Zeitabständen jeweils erhöht wird. Es kann auch vorgesehen sein, dass eine solche Zahl in vorbestimmten Zeitabständen erhöht wird und bei Erreichen eines Maximalwerts wieder vom niedrigsten Wert zu zählen anfängt. Diese Signale bzw. diese Mitteilungen werden vorzugsweise ausgesendet, wenn die Kommunikation bzw. die Signal-Kommunikation bzw. die Datenkommunikation zwischen dem elektronischen Getriebesteuergerät und dem elektronischen Motorsteuergerät gegeben bzw. funktionsfähig ist, wobei bei Ausbleiben dieser Signale bzw. Mitteilungen bzw. dann, wenn die Veränderung bzw. Erhöhung nicht in der vorbestimmten Weise erfolgt, festgestellt wird, dass die Kommunikation bzw. die Signal-Kommunikation bzw. die Datenkommunikation zwischen dem elektronischen Getriebesteuergerät und dem elektronischen Motorsteuergerät nicht gegeben bzw. funktionsbeeinträchtigt ist.

Besonders bevorzugt ist vorgesehen, dass der Lebendzähler eine CAN-Mitteilung bzw. eine an das CAN-Bus-System gesendetes Signal ist, die bzw. das alle 10 ms um "Eins" erhöht wird bzw. erhöht werden muss bzw. erhöht werden soll, und nach Erreichen eine Maximalwerts, wie beispielsweise 4, umschlägt, so dass - beispielsweise bei Null oder bei 1, neu zu zählen begonnen wird. Solche Zahlen und solche Zeitperioden können auch andere Werte aufweisen. Es kann beispielsweise vorgesehen sein, dass das elektronische Motorsteuergerät ermittelt, ob auf CAN bzw. im CAN-Bus-System jeweils entsprechend veränderte Signale bzw. Mitteilungen vorhanden sind, und dann, wenn dies nicht der Fall ist, feststellt, dass die Kommunikation bzw. Daten- bzw. Signal-Kommunikation zwischen dem elektronischen Motorsteuergerät und dem elektronischen Getriebesteuergerät funktionsbeeinträchtigt bzw. nicht gegeben bzw. gestört ist. Hierbei kann beispielsweise vorgesehen sein, dass das elektronische Motorsteuergerät in den gleichen Zeitabständen, in denen das betreffende Signal bzw. die betreffende Mitteilung verändert werden soll, eine entsprechende Abfrage durchführt bzw. ein entsprechendes Signal von CAN bzw. vom CAN-Bus-System einliest; es kann auch vorgesehen sein, dass diese Zeitabstände größer sind als die, nach denen das Signal bzw. die Mitteilung jeweils verändert werden soll. Beispielsweise kann vorgesehen sein, dass im elektronischen Motorsteuergerät ermittelt wird, um welchen Wert sich das Signal bzw. die Mitteilung bzw. die Zahl, die dadurch repräsentiert wird, seit der Letzten Abfrage bzw. Ermittlung hätte ändern müssen, und dass dann überprüft wird, ob diese Änderung tatsächlich gegeben ist. Bei dem genannten Beispiel, bei dem alle 10 ms das Signal bzw. die Mitteilung bzw. die hierdurch repräsentierte Zahl um "Eins" erhöht werden soll, und beispielsweise bis "Vier" hochgezählt und anschließend bei "Null" wieder mit dem Hochzählen begonnen wird, kann beispielsweise auch vorgesehen sein, dass das elektronische Motorsteuergerät alle 20 ms überprüft, ob sich der Wert um "Zwei" erhöht hat wobei, bei solchen beispielhaften Gestaltungen, bei denen ein "Umschlagen" des Zählers, also ein erneutes Beginnen von einem Startwert, wie Null, nach Erreichen eines Maximalwerts, wie z.B. "vier" gegeben ist, dieses Umschlagen berücksichtigt werden kann.

Besonders bevorzugt überprüft das elektronische Motorsteuergerät in Zeitabständen, die größer oder gleich den Zeitabständen sind, in welchen das Signal bzw. die Mitteilung sich bevorzugt ändern soll, ob eine Änderung gegeben ist.

Vorzugsweise wird festgestellt, dass eine funktionsbeeinträchtigte bzw. keine Kommunikation zwischen dem Getriebesteuergerät und dem CAN-Bus-System bzw. zwischen dem Getriebesteuergerät und dem elektronischen Motorsteuergerät gegeben ist, wenn keine CAN-Mitteilung bzw. CAN-Signale mehr von dem elektronischen Getriebesteuergerät gesendet werden bzw. das elektronische Motorsteuergerät keine Signale mehr an das CAN-Bus-System sendet. Solche Signale bzw. Mitteilungen sind bevorzugt solche, die vorbestimmte Betriebskennwerte anzeigen. Dies können beispielsweise Betriebskennwerte einer Kupplungseinrichtung, wie Stellung der Kupplungseinrichtung oder von der Kupplungseinrichtung übertragbares Drehmoment oder dergleichen, und / oder einer Getriebeeinrichtung, wie eingelegter Gang oder Stellung des Getriebe-Betätigungssystems oder dergleichen, sein. Besonders bevorzugt ist vorgesehen, dass solche Signale im störungsfreien Betrieb, wenn die Kommunikation bzw. Signalkommunikation bzw. Datenkommunikation zwischen dem elektronischen Motorsteuergerät und dem elektronischen Getriebesteuergerät gegeben bzw. funktionsfähig ist und die Signalübertragungsstrecke funktionsfähig ist und das elektronische Getriebesteuergerät funktionsfähig ist, vom elektronischen Getriebesteuergerät an das CAN-Bus-System bzw. auf CAN gesendet werden. Bevorzugt ist vorgesehen, dass das elektronische Motorsteuergerät ermittelt, ob solche Signale innerhalb vorbestimmter Zeitfenster vom elektronischen Getriebesteuergerät auf CAN bzw. an das CAN-Bus-System gesendet wurden, wobei es besonders bevorzugt feststellt, dass keine Signale vom elektronischen Getriebesteuergerät,an CAN-Bus gesendet wurden, wenn innerhalb solcher Zeitfenster dies nicht festgestellt wurde.

Bevorzugt ermittelt das elektronische Motorsteuergerät, ob solche Signale bzw. Mitteilungen an das CAN-Bus-System gesandt wurden bzw. werden. Beispielsweise ermittelt das elektronische Motorsteuergerät dies in jeweils vorbestimmten Zeitfenstern.

Gemäß einer bevorzugten Gestaltung wird ermittelt, ob sich Signale bzw. Mitteilungen, die vom elektronischen Getriebesteuergerät an das CAN-Bus-System gesandt werden bzw. werden sollen, so ändern, dass angezeigt wird, dass sich BetriebsKennwerte verändert haben. Sofern dann festgestellt wird, dass sich vorbestimmte Betriebskennwerte, bevorzugt innerhalb einer Zeitperiode, die größer als eine vorbestimmte Zeitperiode ist, nicht geändert haben, wird vorzugsweise festgestellt, dass die Signalverbindung bzw. die Kommunikation bzw. die Signal-Kommunikation bzw. die Daten-Kommunikation zwischen dem elektronischen Motorsteuergerät und dem elektronischen Getriebesteuergerät bzw. dem elektronischen Getriebesteuergerät und dem CAN-Bus-System funktionsbeeinträchtigt, insbesondere ausgefallen ist; in bevorzugter Gestaltung ist vorgesehen, dass - alternativ oder ergänzend - dann festgestellt wird, dass das elektronische Getriebesteuergerät und / oder die Signalübertragungsstrecke funktionsbeeinträchtigt, insbesondere ausgefallen, ist.

Bei einer solchen Ermittlung, bei der ermittelt wird, ob von dem Getriebesteuergerät angezeigten Signale anzeigen, dass sich bestimmte Betriebskennwerte geändert haben, bzw. in einer vorbestimmten Zeitperiode verändert haben, werden bevorzugt Erfahrungswerte oder sonstige Informationen verwendet werden, anhand welcher darauf geschlossen werden kann, dass sich solche Betriebskennwerte innerhalb einer vorbestimmten Zeitperiode hätten ändern müssen. Insbesondere kann hier eine Plausibilitätsprüfung vorgenommen werden. Eine solche Plausibilitätsprüfung kann beispielsweise auch anhand von Daten oder Kennwerten vorgenommen werden, die gegebenenfalls im Motorsteuergerät gespeichert sind. Beispielsweise kann bei einem System mit genau einer Anfahrkupplung vorgesehen sein, dass dann, wenn das elektronische Getriebesteuergerät für längere Zeit anzeigt, dass eine Anfahrkupplung geöffnet ist, und gleichzeitig die Information bereit steht, dass das Motormoment deutlich oberhalb des Leerlaufmotormoments in dieser Zeitperiode gegeben war, darauf geschlossen werden, dass die Information hinsichtlich der Kupplungsstellung fehlerhaft ist; dies ist allerdings nicht dahingehend zu verstehen, dass bei allen erfindungsgemäßen Gestaltungen, bei denen genau eine Anfahrkupplung gegeben ist, auch diese spezielle, bevorzugte Routine gegeben sein muss.

Vorzugsweise wird das maximal zulässige Motormoment auf einen Wert beschränkt, der größer als "Null" ist. Bevorzugt ist ferner, dass das maximal zulässige Motormoment auf "Null" beschränkt wird, wobei hierdurch besonders bevorzugt bewirkt wird, dass die Brennkraftmaschine abschaltet wird, und zwar insbesondere automatisch.

Bevorzugt wird eine Motormomentgrenze zum Begrenzen des maximal zulässigen Motormoments verwendet. Eine solche Motormomentgrenze für das maximal zulässige Motormoment ist insbesondere eine (obere) Grenze bzw. Schranke, gemäß welcher - insbesondere wenn sie gesetzt ist - , dass maximal zulässige Motormoment beschränkt ist. Bevorzugt ist vorgesehen, dass eine Motormomentgrenze gesetzt wird, um das maximal zulässige Motormoment zu begrenzen; eine solche gesetzte Motor Motormomentgrenze ist vorzugsweise gemäß einer in dieser Offenbarung beschriebenen Gestaltungsmöglichkeit einer Motormomentgrenze gestaltet.

Die Motormomentgrenze kann beispielsweise ein Drehmomentwert sein, der kleiner als 400 Nm ist, und / oder der zwischen 0 Nm und 180 Nm liegt, und / oder zwischen 20 Nm und 160 Nm und / oder zwischen 40 Nm und 140 Nm und / oder zwischen 60 Nm und 120 Nm und / oder zwischen 80 Nm und 120 Nm; in einer bevorzugten Gestaltung ist beispielsweise vorgesehen, das maximal zulässige Motormoment auf 100 Nm begrenzt wird bzw. die Motormomentgrenze 100 Nm ist. Vorzugsweise ist vorgesehen, dass diese Motormomentgrenze dem Fahrer immer ermöglicht, das Kraftfahrzeug mittels der Bremse, insbesondere Betriebsbremse, anzuhalten und / oder abzuwürgen bzw., dass diese Motormomentgrenze so gesetzt wird, dass dieses Abwürgen bzw. Anhalten stets möglich ist. Auch andere als die genannten Werte für die Motormomentgrenze sind bevorzugt. Bevorzugt ist vorgesehen, dass diese Motormomentgrenze stets gleich ist und / oder konstant ist. Es kann beispielsweise vorgesehen sein, dass genau ein konstanter gleich bleibender Wert als Motormomentgrenze abgespeichert ist.

Vorzugsweise werden zum Begrenzen des maximal zulässigen Motormoments verschiedene Motormomentgrenzen verwendet. Es kann beispielsweise vorgesehen sein, dass eine aktuell gesetzte Motormomentgrenze aus mehreren Motormomentgrenzen ausgewählt wird, wobei besonders bevorzugt vorbestimmte Auswahlkriterien verwendet werden. Gemäß einer besonders bevorzugten Gestaltung ist vorgesehen, dass in Abhängigkeit der Fahrpedalstellung des bzw. eines Kraftfahrzeuges die gesetzte Motormomentgrenze ausgewählt oder bestimmt wird. Beispielsweise ist dies so, das eine erste Motormomentgrenze gesetzt wird, wenn das Fahrpedal eines Kraftfahrzeuges betätigt ist, und eine zweite, bevorzugt geringere, wenn es nicht betätigt.

Die Motormomentgrenze bzw. die jeweils aktuell gesetzte Motormomentgrenze, kann ein Wert sein, der für das betreffende Kraftfahrzeug immer gleich ist, und bevorzugt gespeichert ist; Die Motormomentgrenze bzw. die jeweils aktuell gesetzte Motormomentgrenze, kann auch von vorbestimmten Situationen bzw. Betriebskennwerten abhängen. Beispielsweise kann vorgesehen sein, dass die Motormomentgrenze bzw. gesetzte Motormomentgrenze von der Fahrpedalstellung abhängt. Die Motormomentgrenze für das maximal zulässige Motormoment kann bevorzugt auch ein funktionaler Zusammenhang sein. Bevorzugt ist beispielsweise, dass die Motormomentgrenze für das maximal zulässige Motormoment eine Funktion der Zeit sein, die ausgehend vom einer bestimmten (Start)Wert für das maximal zulässige Motormoment, das maximal zulässige Motormoment mit zunehmender Zeit zunehmend reduziert.

Vorzugsweise wird eine Motormomentgrenze für das maximal zulässige Motormoment in Abhängigkeit von einem Input des Fahrers des Kraftfahrzeuges in das elektronische Motorsteuergerät gesetzt bzw. ausgewählt bzw. bestimmt. Dieses bzw. ein solches Input wird in bevorzugter Gestaltung über die Fahrpedalstellung eines Kraftfahrzeuges dem elektronischen Motorsteuergerät angezeigt. Gemäß einer bevorzugten Gestaltung ist vorgesehen, dass die Motormomentgrenze für das maximal zulässige Motormoment bei nicht betätigtem Fahrpedal auf einen Wert gesetzt wird, der zwischen 30 und 150 Nm ist, und bei betätigtem Fahrpedal auf einen Wert, der zwischen 150 Nm 300 Nm ist. Diese Werte können in weiterer bevorzugter Gestaltung auch abweichend sein.

Besonders bevorzugt ist vorgesehen, dass bei betätigtem Fahrpedal die Motormomentgrenze für das maximal zulässige Motormoment auf 200 Nm gesetzt wird, und bei nicht betätigtem Fahrpedal auf 50 Nm. Auch diese Werte können gemäß anderen bevorzugten Gestaltungen anders sein.

Vorzugsweise wird das maximal zulässige Motormoment so begrenzt, dass mittels einer Betriebsbremse des Kraftfahrzeuges stets ein Abbremsen des Kraftfahrzeugs bis zum Stillstand bzw. ein Abwürgen des Kraftfahrzeuges möglich ist, und zwar insbesondere bei geschlossener Kupplung. Vorzugsweise wird das Kraftfahrzeug bzw. die Brennkraftmaschine bei diesem Abbremsen bis zum Stillstand bzw. Abbremsen abgewürgt.

Um das Abwürgen zu erleichtern bzw. ein kontrolliertes Abschalten des Motors bzw. der Brennkraftmaschine zu ermöglichen, ist besonders bevorzugt vorgesehen, dass sich die Brennkraftmaschine (auch) selbst abschalten kann. Dies wird vorzugsweise mittels einer Gestaltung realisiert, bei der die erwähnten zusätzlichen Abschaltbedingungen in einer der erwähnten Weise verwendet werden. Es ist auch bevorzugt, dass ein solches Abschalten bzw. Selbst-Abschalten der Brennkraftmaschine über ein entsprechendes Setzten der Motormomentgrenze für das maximal zulässige Motormoment bewirkt wird, die hierzu beispielsweise auf 0 Nm gesetzt wird.

In einer bevorzugten Gestaltung ist vorgesehen, dass eine Betriebsbremse des Kraftfahrzeuges vorgesehen ist, die ein vorbestimmtes Bremsmoment erzeugen kann, und dass die Motormomentgrenze für das maximal zulässige Motormoment auf einen Wert gesetzt wird, der von diesem Bremsmoment abhängt.

Vorzugsweise wird die Motormomentgrenze zur Begrenzung des maximal zulässigen Motormoments auf einen Wert gesetzt, der so ist, dass unter Berücksichtigung der im Antriebsstrang aktuell gegebenen Gesamtübersetzung oder sämtlicher im Antriebsstrang einstellbarer (Gesamt)Übersetzungen oder der maximal oder der minimal im Antriebsstrang einstellbaren Übersetzung, insbesondere Gesamtübersetzung, das Bremsmoment bzw. das maximal erzeugbare Bremsmoment der Betriebsbremse stets ausreicht, um das Kraftfahrzeug anzuhalten bzw. abzuwürgen.

Es ist besonders bevorzugt vorgesehen, dass die Motormomentgrenze bzw. die gesetzte Motormomentgrenze für das maximal zulässige Motormoment auf einen Wert gesetzt wird, der kleiner oder gleich dem Quotienten aus dem von der Betriebsbremse erzeugbaren Bremsmoment und dem im Antriebsstrang zwischen der Motorausgangswelle und den Antriebsachsen des Kraftfahrzeuges aktuell gegebenen oder maximal oder minimal einstellbaren Übersetzung ist. Es ist in bevorzugter Gestaltung vorgesehen, dass hier alle Übersetzungen bzw. Gesamtübersetzungen berücksichtigt werden, die im Antriebsstrang schaltbar sind, so dass sichergestellt ist, dass bei jeder schaltbaren Übersetzung ein Abbremsen bis zu Stillstand bzw. ein Abwürgen des Kraftfahrzeuges ermöglicht wird.

In einer bevorzugten Gestaltung wird bei der Festlegung der Motormomentgrenze ein Sicherheitsfaktor vorgesehen. Es kann beispielsweise vorgesehen sein, dass die Motormomentgrenze für das maximal zulässige Motormoment auf das 0,5-fache oder 0,7-fache oder 0,8-fache oder 0,9-fache des angesprochenen Quotienten gesetzt wird. Ein Sicherheitsfaktor kann allerdings auch anders gewählt werden, beispielsweise kleiner als 0,5. Bei der Bestimmung eines solchen Sicherheitsfaktors kann beispielsweise auch berücksichtigt werden, dass die Betriebsbremse gegebenenfalls einem Verschleiß unterliegt, der dazu führen kann, dass das erzeugbare Bremsmoment abnimmt.

Es kann insbesondere vorgesehen sein, dass das Motorsteuergerät das Motormoment begrenzt bzw. beschränkt, wenn das Getriebesteuergerät aufhört, vernünftige Signale zu senden (z.B. Lebendzähler wird nicht upgedated, CAN-Signal bzw. CAN-Mitteilung fehlt).

Es ist in bevorzugter Gestaltung vorgesehen, dass das elektronische Motorsteuergerät die Motormomentgrenze für das maximal zulässige Motormoment ermittelt und / oder vorgibt und / oder auswählt und / oder setzt. Bevorzugt steuert das elektronische Motorsteuergerät die Brennkraftmaschine so, dass das Motormoment die Motormomentgrenze für das maximal zulässige Motormoment nicht überschreitet, wenn diese Motormomentgrenze vorgegeben bzw. gesetzt ist bzw. das maximal zulässige Motormoment begrenzt ist.

Es wird besonders bevorzugt elektrisch bzw. elektronisch gesteuert oder sichergestellt, dass dann, wenn das maximal zulässige Motormoment begrenzt ist, das aktuelle Motormoment die Motormomentgrenze bzw. gesetzte Motormomentgrenze nicht überschreitet.

In einer bevorzugten Gestaltung ist vorgesehen, dass das Getriebesteuergerät einen Hauptprozessor aufweist, und ein redundanter Prozessor vorgesehen ist, wobei sich der Hauptprozessor und der redundante Prozessor gegenseitig kontrollieren, und wobei die Stellung der Getriebebetätigungseinrichtung und der Kupplungsbetätigungseinrichtung jeweils in einer vorbestimmten, insbesondere aktuell gegebenen Stellung gehalten bzw. eingefroren werden, wenn die gegenseitige Kontrolle der Prozessoren ergibt, das eine Prozessortunktionsstörung einer dieser Prozessoren gegeben ist. Es kann insbesondere ein sog. ISM vorgesehen sein. Besonders bevorzugt wird, dann wenn die Stellung der Getriebebetätigungseinrichtung und / oder der Kupplungsbetätigungseinrichtung eingefroren wird, dieses dem elektronischen Motorsteuergerät angezeigt, wobei das elektronische Motorsteuergerät dann das maximal zulässige Motormoment begrenzt. und / oder, vorzugsweise wenn vorbestimmte zusätzliche Abschaltbedingungen erfüllt sind, die Brennkraftmaschine abschaltet bzw. ein automatisches Abschalten der Brennkraftmaschine bewirkt.

Bevorzugt ist ferner, dass das maximal zulässige Motormoment begrenzt wird und / oder die Brennkraftmaschine - beispielsweise, wenn vorbestimmte zusätzliche Abschaltbedingungen erfüllt sind - abschaltet wird, wenn festgestellt wird, dass eine Stellung der Getriebebetätigungseinrichtung und / oder der Kupplungsbetätigungseinrichtung nicht verändert werden kann bzw. trotz entsprechender Ansteuerung nicht verändert wird. Es kann in bevorzugter Gestaltung also auch vorgesehen sein, dass festgestellt wird, dass eine Stellung der Getriebebetätigungseinrichtung und / oder der Kupplungsbetätigungseinrichtung nicht verändert werden kann, und hierdurch oder unter anderem hierdurch eine Begrenzung des maximal zulässigen Motormoments bzw. ein Abschalten der Brennkraftmaschine ausgelöst wird, ohne dass eine Gestaltung mit redundantem Prozessor bzw. ein ISM gegeben ist bzw. ohne dass ein Einfrieren der Stellung der Getriebebetätigungseinrichtung und / oder der Kupplungsbetätigungseinrichtung mittels einer solchen Gestaltung gegeben ist.

In bevorzugter Gestaltung ist vorgesehen, dass, zumindest wenn das Motormoment bzw. das maximal zulässige Motormoment nicht erfindungsgemäß beschränkt ist, das Motormoment mittels eines Leerlaufreglers bei laufender Brennkraftmaschine so geregelt wird, dass die Motordrehzahl in Betrieb zumindest der Leerlaufdrehzahl entspricht. Hierbei kann beispielsweise vorgesehen sein, dass mittels des Leerlaufreglers das Motormoment erhöht wird, wenn die Motordrehzahl unter die Leerlaufdrehzahl absinkt. Es kann beispielsweise vorgesehen sein, dass der Leerlaufregler bei offenem Antriebsstrang, also insbesondere geöffneter Anfahrkupplung oder in "Neutral" geschalteter Getriebeeinrichtung, das Motormoment so steuert, dass die Brennkraftmaschine mit einer vorbestimmten Leerlaufdrehzahl dreht bzw. nicht oder möglichst nicht unter diese absinkt. Beispielsweise kann vorgesehen sein, dass der Leerlaufregler bei geöffnetem Antriebsstrang ein Motormoment von 400 Nm angesteuert, um zu bewirken, dass die Brennkraftmaschine mit der Leerlaufdrehzahl dreht. Dieser Wert kann auch ein anderer sein. Ein solcher Leerlaufregler ist vorzugsweise so gestaltet, dass bei abfallender Motordrehzahl - was insbesondere bei geschlossenem oder sich schließendem Antriebsstrang gegeben sein kann - das Motormoment erhöht wird, um zu verhindern, dass die Motordrehzahl unter die Leerlaufdrehzahl absinkt bzw. bei einem solchen Absinken wieder die Leerlaufdrehzahl oder einen höheren Wert angehoben wird. Bevorzugt ist vorgesehen, dass ein Leerlaufregler bzw. ein solcher Leerlaufregler maximal das begrenzte maximal zulässige Motormoment bzw. das der gesetzten Motormomentgrenze entsprechende maximal zulässige Motormoment ansteuert bzw. bewirkt, wenn das maximal zulässige Motormoment erfindungsgemäß begrenzt ist bzw. eine Motormomentgrenze für das maximal zulässige Motormoment gesetzt ist.

Erfindungsgemäß ist ferner insbesondere ein Sicherheitssystem für ein Kraftfahrzeug vorgesehen, wobei dieses Sicherheitssystem elektronische Signale empfangen, aussenden und verarbeiten kann und eine Speichereinrichtung aufweist, in welcher wenigstens ein Steuerungsprogramm gespeichert ist, welches ein erfindungsgemäßes Verfahren steuern kann bzw. steuert.

Das Sicherheitssystem weist bevorzugt ein elektronisches Motorsteuergerät auf, wobei dieses elektronische Motorsteuergerät elektronische Signale empfangen, aussenden und verarbeiten kann. Ferner ist vorzugsweise vorgesehen, dass dieses elektronische Motorsteuergerät die Speichereinrichtung aufweist, in welcher das Steuerungsprogramm gespeichert ist, welches ein erfindungsgemäßes Verfahren steuert bzw. steuern kann.

Erfindungsgemäß ist ferner insbesondere ein Kraftfahrzeug mit einem Antriebstrangsystem vorgesehen, welches Antriebstrangsystem einen Antriebsstrang aufweist, der antriebsseitig mit einer Brennkraftmaschine gekoppelt ist und im Betrieb von dieser belastet wird und abtriebsseitig mit Rädern des Kraftfahrzeuges gekoppelt ist, so dass diese Räder mittels der Brennkraftmaschine angetrieben werden können, wobei in diesem Antriebsstrang ein mittels einer Getriebe-Betätigungseinrichtung betätigbares Getriebe angeordnet ist, mittels welchem die zwischen der Brennkraftmaschine und den antreibbaren Rädern im Antriebsstrang gegebene Übersetzung verändert werden kann, wobei ferner wenigstens eine mittels einer Kupplungs-Betätigungseinrichtung betätigbare Anfahrkupplung im Antriebsstrang gegeben ist, und wobei das Antriebstrangsystem ein elektronisches Motorsteuergerät zur Steuerung der Brennkraftmaschine aufweist sowie ein elektronisches Getriebesteuergerät zur Steuerung der Getriebeeinrichtung bzw. Getriebe-Betätigungseinrichtung und / oder der Anfahrkupplung bzw. Kupplungs-Betätigungseinrichtung, wobei eine Bremse, zum Abbremsen des Kraftfahrzeuges vorgesehen ist, wobei weiter ein Leerlaufregler vorgesehen ist, welcher die Brennkraftmaschine bzw. ein Kraftstoffbemessungsglied im Betrieb so steuert, dass das Motormoment erhöht wird, wenn die Motordrehzahl unter die Leerlaufdrehzahl absinkt, um die Motordrehzahl auf oder über diese Leerlaufdrehzahl zu steigern, und wobei die Motorleistung sowie die schaltbaren Übersetzungen des Antriebsstrangs und die Regelungsfunktion des Leerlaufreglers so sind, dass zumindest bei einer schaltbaren Übersetzung und bei geschlossenem Antriebsstrang das Motormoment auf einen Wert gesteigert werden könnte, der so ist, dass bei dieser Übersetzung das Bremsmoment der Bremse nicht ausreicht, um eine Verzögerung des Fahrzeuges zu bewirken, wobei weiter ein erfindungsgemäßes Sicherheitssystem vorgesehen ist, durch welches bewirkt wird, dass dieses Kraftfahrzeug mittels dieser Bremse bei geschlossenem Antriebsstrang und jeder in diesem Antriebsstrang schaltbaren Übersetzung abgebremst werden kann.

Unabhängig davon, welche Übersetzung aktuell im Getriebe geschaltet ist bzw. welcher Gang dort eingelegt ist lässt sich somit dieses erfindungsgemäße Kraftfahrzeug auch bei geschlossenem Antriebsstrang, bzw. geschlossener Kupplung bis zum Stillstand abbremsen bzw. abwürgen.

Bevorzugt ist der Leerlaufregler bzw. die Funktionalität des Leerlaufreglers im elektronischen Motorsteuergerät integriert.

Vorzugsweise ist vorgesehen, dass das Sicherheitssystem auch dann bewirkt wird, dass dieses Kraftfahrzeug mittels dieser Bremse bei geschlossenem Antriebsstrang und jeder schaltbaren Übersetzung abgebremst werden kann, wenn eine Funktionsbeeinträchtigung in der Drehmomentübertragungseinrichtung und / oder in der Getriebeeinrichtung gegeben ist und / oder wenn das elektronische Getriebesteuergerät und / oder eine Signalübertragungsstrecke, die sich an das elektronische Getriebesteuergerät anschließt, ausgefallen ist, und / oder wenn keine bzw. eine funktionsbeeinträchtigte Daten- bzw. Signal-Kommunikation zwischen dem elektronischen Getriebesteuergerät und dem elektronischen Motorsteuergerät gegeben ist.

Bevorzugt ist die Getriebeeinrichtung eine automatisiert gesteuerte Getriebeeinrichtung, und zwar besonders bevorzugt ein Automatisiertes Schaltgetriebe (ASG) oder ein Parallelschaltgetriebe (PSG) oder ein Unterbrechungsfreies Schaltgetriebes (USG).

Bevorzugt ist wenigstens eine Anfahrkupplungseinrichtung vorgesehen, die als elektronische gesteuerte Kupplungseinrichtung gestaltet ist.

Es gibt Kraftfahrzeuge mit hohem Drehmoment bzw. Motordrehmoment (das sogar bei einer Leerlaufregelung gegeben sein kann) und geringen Übersetzungen (z.B. mit geringem Bereich für Bergauffahrten), bei denen es mit konventionellen Gestaltungen schwierig oder unmöglich ist, den Motor bzw. die Brennkraftmaschine mittels der Bremse, wie Betriebsbremse, abzuwürgen. Mittels erfindungsgemäßen Gestaltungen kann beispielsweise bzw. bevorzugt diese Situation (insbesondere bei geschlossener und gegebenenfalls eingefrorener Kupplung und eingelegtem und gegebenenfalls eingefrorenem Gang in der Getriebeeinrichtung) verbessert werden.

Im Folgenden werden beispielhafte bzw. bevorzugte erfindungsgemäße Gestaltungen anhand der Figuren erläutert, wodurch die Erfindung allerdings nicht beschränkt werden soll. Es zeigt:

Fig. 1 die Schritte eines beispielhaften erfindungsgemäßen Verfahrens in schematischer Darstellung;

Fig. 2 die Schritte eines beispielhaften erfindungsgemäßen Verfahrens in schematischer Darstellung; und

Fig. 3 ein beispielhaftes erfindungsgemäßes Kraftfahrzeug mit einem beispielhaften erfindungsgemäßen Sicherheitssystem in schematischer Darstellung;

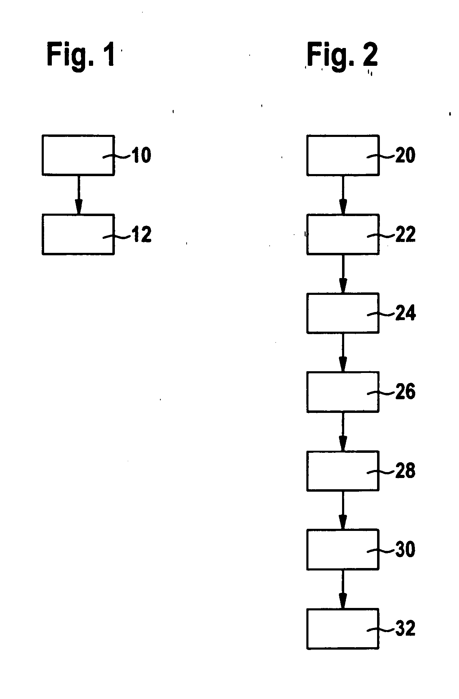

Fig. 1 zeigt die Schritte eines beispielhaften erfindungsgemäßen Verfahrens in schematischer Darstellung.

Im Schritt 10 wird ermittelt, ob eine Kommunikation bzw. Datenkommunikation bzw. Signalkommunikation zwischen einem elektronischen Motorsteuergerät 132 eines Kraftfahrzeuges 100 und einem elektronischen Getriebesteuergerät 110 dieses Kraftfahrzeuges 100 gegeben ist, bzw. ob das elektronische Motorsteuergerät 132 die Kommunikation bzw. Datenkommunikation bzw. Signalkommunikation mit dem elektronischen Getriebesteuergerät 110 verloren hat bzw. diese fehlt.

Eine fehlende Kommunikation bzw. Datenkommunikation bzw. Signalkommunikation wird beispielsweise dadurch bzw. daran festgestellt, dass ein Lebendzähler nicht mehr korrekt vom elektronischen Getriebesteuergerät 110 erhöht wird. Ein solcher Lebendzähler kann beispielsweise eine CAN-Mitteilung bzw. ein CAN-Signal bzw. ein vom elektronischen Getriebesteuergerät 110 auf CAN bzw. an ein CAN-System gesendetes Signal sein, dass alle 10 ms um 1 erhöht werden muss bzw. soll und bei Erreichen eines Maximalwerts, wie beispielsweise "Vier" umschlägt, so dass vom Startwert, beispielsweise "Null", neu hochgezählt wird.

Eine fehlende Kommunikation bzw. Datenkommunikation bzw. Signalkommunikation kann beispielsweise auch - alternativ oder ergänzend - dadurch bzw. daran festgestellt werden, das keine CAN-Mitteilungen bzw. CAN-Signale bzw. an ein CAN-Bus-System gerichteten Signale mehr vom elektronischen Getriebesteuergerät 110 gesendet werden.

Sofern im Schritt 10 festgestellt wurde, dass das elektronische Motorsteuergerät 132 die Kommunikation bzw. Datenkommunikation bzw. Signalkommunikation mit dem elektronischen Getriebesteuergerät 110 verloren hat bzw. diese fehlt, wird im Schritt 12 das maximal zulässige Motormoment begrenzt.

Dies kann so sein, dass das maximal zulässige Motormoment auf einen vorbestimmten Wert, wie beispielsweise 100 Nm begrenzt wird, und der Fahrer des Kraftfahrzeuges 100 dann stets in der Lage ist, das Kraftfahrzeug 100 mittels der Bremse 140 bzw. Betriebsbremse abzubremsen.

Es kann auch vorgesehen sein, dass verschiedene Motormomentgrenzen entsprechend dem Fahrer-Input in das elektronische Motorsteuergerät 132 verwendet werden. Beispielsweise kann vorgesehen sein, dass das maximal zulässige Motormoment bei nicht gedrücktem bzw. betätigtem Fahrpedal auf 50 Nm begrenzt wird, und bei gedrücktem bzw. betätigtem Fahrpedal auf 200 Nm begrenzt wird.

Fig. 2 zeigt die Schritte eines beispielhaften erfindungsgemäßen Verfahrens in schematischer Darstellung.

Im Schritt 20 wird ermittelt, ob eine bzw. keine Kommunikation bzw. Datenkommunikation bzw. Signalkommunikation zwischen einem elektronischen Motorsteuergerät 132 eines Kraftfahrzeuges 100 und einem elektronischen Getriebesteuergerät 110 dieses Kraftfahrzeuges 100 gegeben ist, bzw. ob das elektronische Motorsteuergerät 132 die Kommunikation bzw. Datenkommunikation bzw. Signalkommunikation mit dem elektronischen Getriebesteuergerät 110 verloren hat bzw. diese fehlt, oder ob das elektronische Getriebesteuergerät 110 einen Fehler hat. Der Schritt 20 kann beispielsweise so sein, wie der Schritt 10 in der Gestaltung gemäß Fig. 1.

Im Schritt 22 wird ermittelt, ob die Bremse 140, insbesondere Betriebsbremse, des Kraftfahrzeuges 100 betätigt ist. ,

Im Schritt 24 wird ermittelt, ob die Geschwindigkeit des Kraftfahrzeuges 100 kleiner als eine vorbestimmte Grenzgeschwindigkeit ist. Die Grenzgeschwindigkeit kann, beispielsweise 7 km/h sein.

Im Schritt 26 wird ermittelt, ob die Motordrehzahl kleiner als eine vorbestimmte Grenze ist. Diese vorbestimmte Grenze kann beispielsweise 50 U/min unterhalb der Leerlaufdrehzahl liegen oder beispielsweise bei 650 U/min.

Im Schritt 28 wird ermittelt, ob das Leerlaufreglermoment größer als ein vorbestimmter Grenzwert ist. Dieser Grenzwert kann beispielsweise 40 Nm oder 400 Nm sein. Dieser Grenzwert ist nicht die Motordrehmomentgrenze, sondern eine davon verschiedene Grenze. Hierdurch soll allerdings nicht ausgeschlossen werden, dass diese verschiedenen Grenzen auf den gleichen Wert gesetzt werden.

Im Schritt 30 wird ermittelt, ob ein vom Fahrer betätigbarer Wählhebel weder in der Parkstellung (P) noch in der Neutralstellung (N) steht. Solche Wählhebel mit einer Parkstellung (P) und einer Neutralstellung (N) sind bekannt und werden beispielsweise bei automatisierten Schaltgetrieben eingesetzt. Beispielsweise bei automatisierten Schaltgetrieben ist in der Regel vorgesehen, dass der solche Wählhebel ferner in eine Stellung für die automatisierten Vorwärtsbetrieb (Drive-Stellung (D)) geschaltet werden kann. Es können auch beispielsweise Stellungen vorgesehen sein, mittels welcher der Fahrer in einer Art Tippbewegung eine Hoch- oder Runterschalten des Getriebes anstoßen kann, wobei das Schalten automatisiert durchgeführt wird. Ein solcher Wählhebel wird vom Fahrer - in der manuell - betätigt. Die Neutralstellung des Wählhebels ist daher auch nicht zu verwechseln mit einer Neutralstellung des Getriebes, die beispielsweise bei automatisierten Schaltgetrieben beim Umschalten zwischen Gänge durchlaufen wird, und zwar insbesondere automatisiert gesteuert.

Sofern die Ermittlung gemäß den Schritten 20 bis 30 ergibt, dass keine Kommunikation bzw. Datenkommunikation bzw. Signalkommunikation zwischen dem elektronischen Motorsteuergerät 132 dem elektronischen Getriebesteuergerät 110 gegeben ist, und die Bremse betätigt ist, und die Geschwindigkeit des Kraftfahrzeuges 100 kleiner als die vorbestimmte Grenzgeschwindigkeit, und die Motordrehzahl kleiner als die vorbestimmte Grenze ist, und das Leerlaufreglermoment größer als der vorbestimmte Grenzwert ist, und Wählhebel nicht in der Parkstellung (P) oder in der Neutralstellung (N) steht, schaltet sich die Brennkraftmaschine bzw. der Motor wird im Schritt 32 ab.

Ob die Bedingungen gemäß den Schritten 20 bis 30 erfüllt sind, kann in beliebiger Reihenfolge oder parallel überprüft werden. Es kann auch vorgesehen dass diese Bedingungen in verschiedene Kombinationen genutzt werden. Dies wurde beispielhaft oben erläutert, wo diverse bevorzugte Kombinationen genannt sind, gemäß welchen die erste bis fünfte Anschaltbedingung kombiniert bzw. verwendet werden können.

Das Selbstabschalten der Brennkraftmaschine, welches insbesondere in der vorbeschriebenen Weise durch geführt werden kann, wird bevorzugt durchgeführt, um das Abwürgen eines Kraftfahrzeuges bzw. einer Brennkraftmaschine zu erleichtern bzw. ein kontrolliertes Abschalten der Brennkraftmaschine bzw. des Motors zu ermöglichen, und zwar beispielsweise wenn ein Kraftfahrzeug bei geschlossener Kupplung bis zum Stillstand abgebremst werden soll bzw. abgewürgt werden soll bzw. wenn das elektronische Getriebesteuergerät 110 ausgefallen ist bzw. wenn die Kommunikation bzw. Datenkommunikation bzw. Signalkommunikation des elektronischen Motorsteuergeräts 132 mit dem elektronischen Getriebesteuergerät 110 fehlt und / oder das maximal zulässige Motormoment hierdurch bedingt begrenzt ist bzw. begrenzt wird.

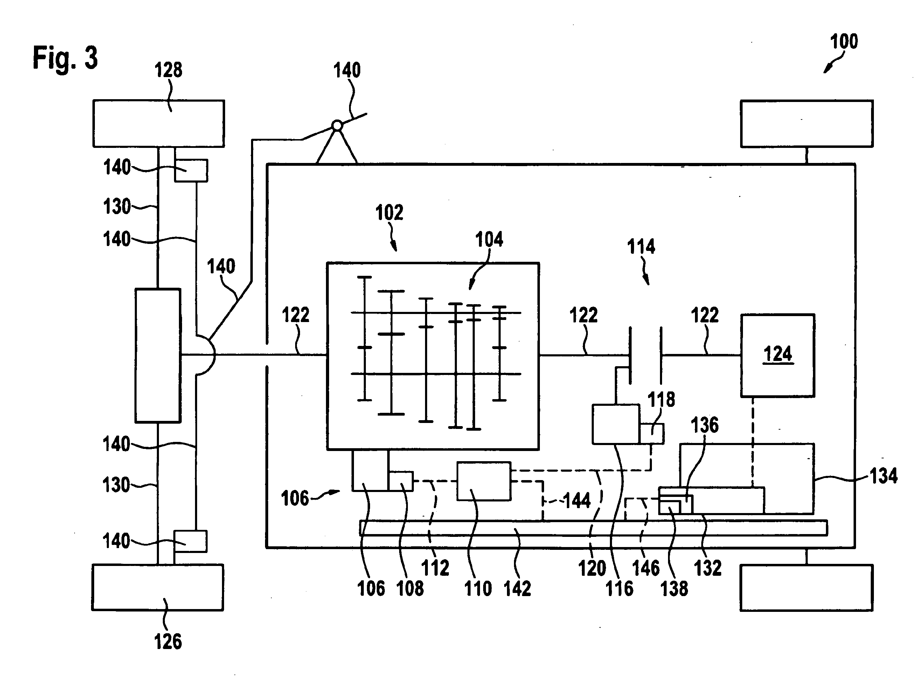

Fig. 3 zeigt ein Kraftfahrzeug 100 mit einer Getriebeeinrichtung, die als automatisiert betätigbares Getriebe 102 gestaltet ist, wie Automatisiertes Schaltgetriebe (ASG). In dem Getriebe 102 können verschieden Gänge 104 geschaltet werden. Zum Betätigen des Getriebes 102 ist eine Getriebe-Betätigungseinrichtung 106 vorgesehen, die einen ersten Elektromotor 108 aufweist. Der erste Elektromotor 108 bzw. die Getriebe-Betätigungseinrichtung 106 bzw. das Getriebe 102 wird von einem elektronischen Getriebesteuergerät 110 angesteuert, was schematisch durch die gestrichelte Linie 112 angedeutet ist.

Ferner ist eine als Anfahrkupplung 114 gestaltete Drehmomentübertragungseinrichtung vorgesehen. Die Anfahrkupplung 114 ist eine Reibungskupplung und als elektronisch gesteuerte Kupplungseinrichtung gestaltet. Es ist eine Kupplungs-Betätigungseinrichtung 116 vorgesehen, mittels welcher die Anfahrkupplung 114 betätigt werden kann, und zwar insbesondere geöffnet und geschlossen werden kann sowie in Stellungen geschaltet werden kann, in denen die Anfahrkupplung 114 schlupft bzw. ein beschränktes Drehmoment übertragen kann. Die Kupplungs-Betätigungseinrichtung 116 weist einen zweiten Elektromotor 118 auf. Dieser zweite Elektromotor 118 bzw. die Kupplungs-Betätigungseinrichtung 116 bzw. die Anfahrkupplung 114 wird von dem elektronischen Getriebesteuergerät 110 gesteuert, was schematisch durch die gestrichelte Linie 120 angedeutet ist.

Das Getriebe 102 sowie die Anfahrkupplung 114 sind im Antriebsstrang 122 des Kraftfahrzeuges 100 angeordnet, der von einer Brennkraftmaschine 124 belastet werden kann, um die mit Rädern 126, 128 versehene Antriebsachse bzw. -achsen 130 anzutreiben. Zur Ansteuerung der Brennkraftmaschine 124 ist ein elektronisches Motorsteuergerät 132 vorgesehen. Das elektronische Motorsteuergerät 132 ist Bestandteil eines Sicherheitssystems 134 und weist eine Speichereinrichtung 136 auf, in der ein Steuerungsprogramm gespeichert, ist das schematisch durch das Bezugszeichen 138 angedeutet ist. Dieses Steuerungsprogramm 138 kann ein erfindungsgemäßes Verfahren steuern. Dieses von dem Steuerungsprogramm 138 gesteuerte Verfahren ist vorzugsweise so, wie es anhand der Fig. 1 erläutert wurde. Bevorzugt ist ferner, dass dieses von dem in der Speichereinrichtung 136 gespeicherten Steuerungsprogramm 138 gesteuerte Verfahren so ist, wie es anhand der Fig. 2 erläutert wurde. Es kann auch vorgesehen sein, dass das von dem in der Speichereinrichtung 136 gespeicherten Steuerungsprogramm 138 gesteuerte Verfahren ein anders gestaltetes erfindungsgemäßes Verfahren ist.

Ferner weist das Kraftfahrzeug 100 eine Bremse 140 auf, mittels welcher ein Bremsmoment erzeugt bzw. bewirkt werden kann, und welche als Betriebsbremse gestaltet sein kann.

Es ist ein CAN-Bus-System 142 vorgesehen. Wie durch die gestrichelte Linie 144 schematisch angedeutet ist, steht das elektronische Getriebesteuergerät 110 mit dem CAN-Bus-System 142 in Signalverbindung.

Durch die gestrichelte Linie 146 ist angedeutet, dass auch das elektronische Motorsteuergerät 132 mit dem CAN-Bus-System 142 in Signalverbindung steht, bzw. das eine Kommunikation zwischen dem elektronischen Motorsteuergerät 132 und dem CAN-Bus-System 142 gegeben ist.

Das elektronische Getriebesteuergerät 110 steht mit dem elektronischen Motorsteuergerät 132 über die Signalverbindung 144, das CAN-Bus-System 142 sowie die Signalverbindung 146 in Signalverbindung bzw. ist eine Kommunikation bzw. Daten-Kommunikation bzw. Signal-Kommunikation zwischen dem elektronischen Getriebesteuergerät 110 und dem elektronischen Motorsteuergerät 132 über die Signalverbindung 144, das CAN-Bus-System 142 sowie die Signalverbindung 146 ermöglicht. Eine solche Signalverbindung bzw. Kommunikation kann auch direkt zwischen dem elektronischen Getriebesteuergerät 110 und dem elektronischen Motorsteuergerät 132 gegeben sein, ohne dass CAN-Bus-System dazwischen ist.

### Bezugszeichenliste

- 10: Schritt
- 12: Schritt
- 20: Schritt
- 22: Schritt
- 24: Schritt
- 26: Schritt
- 28: Schritt
- 30: Schritt
- 32: Schritt
- 100: Kraftfahrzeug
- 102: Getriebe
- 104: Gänge
- 106: Getriebe-Betätigungseinrichtung
- 108: Elektromotor
- 110: Elektronischen Getriebesteuergerät
- 112: gestrichelte Linie 112
- 114: Anfahrkupplung
- 116: Kupplungs-Betätigungseinrichtung
- 118: zweiter Elektromotor
- 120: gestrichelte Linie
- 122: Antriebsstrang
- 124: Brennkraftmaschine
- 126: Rad
- 128: Rad
- 130: Antriebsachse
- 132: elektronisches Motorsteuergerät
- 134: Sicherheitssystem
- 136: Speichereinrichtung von 132
- 138: Steuerungsprogramm
- 140: Bremse
- 142: CAN-Bus-System
- 144: gestrichelte Linie (Signalverbindung)
- 146: gestrichelte Linie (Signalverbindung)

## Patentansprüche

1. Verfahren zur Steuerung eines Kraftfahrzeug-Antriebsstrangsystems, welches einen Antriebsstrang (122), in welchem eine Getriebeeinrichtung (102, 106) und eine Drehmomentübertragungseinrichtung (114) angeordnet ist, aufweist, wobei der Antriebsstrang mittels einer Brennkraftmaschine (124) belastet werden kann, sowie ein elektronisches Motorsteuergerät (132) zur Steuerung der Brennkraftmaschine (124) und ein elektronische Getriebesteuergerät (110) zum Steuern der Getriebeeinrichtung (102, 106) und/oder der Drehmomentübertragungseinrichtung (114), wobei das elektronische Motorsteuergerät (132) mittels einer vorbestimmten Charakteristik ermittelt, ob es die Kommunikation mit dem elektronischen Getriebesteuergerät (110) verloren hat, und wobei das elektronische Motorsteuergerät (132) das maximal zulässige Motormoment begrenzt, wenn es feststellt, dass es die Kommunikation mit dem elektronischen Getriebesteuergerät (110) verloren hat, wobei die Drehmomentübertragungseinheit (114) als Kupplungseinrichtung ausgeführt ist und die Motormomentgrenze für das maximal zulässige Motormoment in Abhängigkeit von wenigstens einem Betriebskennwert des Kraftfahrzeugs ausgewählt oder bestimmt wird, und das maximal zulässige Motormoment gemäß dieser ausgewählten bzw. bestimmten Motormomentgrenze begrenzt wird, **dadurch gekennzeichnet, dass** die Motormomentgrenze für das maximal zulässige Motormoment in Abhängigkeit von der Stellung eines Bauteils des Kraftfahrzeuges ist, dass vom Fahrer betätigt werden kann, ausgewählt oder bestimmt wird, und das maximal zulässige Motormoment gemäß dieser ausgewählten bzw. bestimmten Motormomentgrenze begrenzt wird.

2. Verfahren nach Anspruch 1 , **dadurch gekennzeichnet, dass** ermittelt wird, ob zwischen dem elektronischen Getriebesteuergerät (110) und dem elektronischen Motorsteuergerät (132) eine bzw. eine funktionsfähige Daten- bzw. Signal-Kommunikation gegeben ist, und / oder ermittelt wird, ob das elektronische Getriebesteuergerät (110) eine Funktionsbeeinträchtigung aufweist, und / oder ermittelt wird, ob die Getriebeeinrichtung (102, 106) und / oder die Drehmomentübertragungseinrichtung (114) eine Funktionsbeeinträchtigung aufweist, wobei das maximal zulässige Motormoment der Brennkraftmaschine (124) begrenzt wird, wenn ermittelt wird, dass keine und / oder eine funktionsbeeinträchtigte Daten- bzw. Signal-Kommunikation zwischen dem elektronischen Getriebesteuergerät (110) und dem elektronischen Motorsteuergerät (132) gegeben ist, und / oder das maximal zulässige Motormoment der Brennkraftmaschine (124) begrenzt wird, wenn ermittelt wird, dass das elektronische Getriebesteuergerät (110) eine Funktionsbeeinträchtigung aufweist, und / oder das maximal zulässige Motormoment der Brennkraftmaschine (124) begrenzt wird, wenn ermittelt wird, dass die Getriebeeinrichtung (102, 106) und / oder die Drehmomentübertragungseinrichtung (114) eine Funktionsbeeinträchtigung aufweist.

3. Verfahren nach Anspruch 1, **dadurch gekennzeichnet, dass** ermittelt wird, ob zwischen dem elektronischen Getriebesteuergerät (110) und dem elektronischen Motorsteuergerät (132) eine bzw. eine funktionsfähige Daten- bzw. Signal-Kommunikation gegeben ist, und / oder ermittelt wird, ob das elektronische Getriebesteuergerät (110) eine Funktionsbeeinträchtigung aufweist, und / oder ermittelt wird, ob die Getriebeeinrichtung (102, 106) und / oder die Drehmomentübertragungseinrichtung (114) eine Funktionsbeeinträchtigung aufweist, wobei die Brennkraftmaschine (124) abgeschaltet wird, wenn ermittelt wird, dass keine und / oder eine funktionsbeeinträchtigte Daten- bzw. Signal-Kommunikation zwischen dem elektronischen Getriebesteuergerät (110) und dem elektronischen Motorsteuergerät (132) gegeben ist, und / oder die Brennkraftmaschine (124) abgeschaltet wird, wenn ermittelt wird, dass das elektronische Getriebesteuergerät (110) eine Funktionsbeeinträchtigung aufweist, und / oder die Brennkraftmaschine (124) abgeschaltet wird, wenn ermittelt wird, dass in der Getriebeeinrichtung (102, 106) und / oder in der Drehmomentübertragungseinrichtung (114) eine Funktionsbeeinträchtigung gegeben ist, und wenn jeweils zusätzlich festgestellt wird, dass die Bremse (140) des Kraftfahrzeuges (100) betätigt ist, und / oder, wenn jeweils zusätzlich festgestellt wird, dass die Fahrzeuggeschwindigkeit kleiner als eine vorbestimmte Grenzgeschwindigkeit ist, und / oder, wenn jeweils zusätzlich festgestellt wird, dass die Motordrehzahl kleiner als eine vorbestimmte Grenze ist, und / oder, wenn jeweils zusätzlich festgestellt wird, dass das Leerlaufreglermoment größer als ein vorbestimmter Grenzwert ist, und / oder, wenn jeweils zusätzlich festgestellt wird, dass ein vom Fahrer betätigbarer Wählhebel weder in der Parkstellung noch in der Neutralstellung steht.

4. Verfahren nach einem der Ansprüche 2 oder 3, **dadurch gekennzeichnet, dass** mittels des elektronischen Motorsteuergeräts (132) ermittelt wird, ob zwischen dem elektronischen Getriebesteuergerät (110) und dem elektronischen Motorsteuergerät (132) eine bzw. eine funktionsfähige Daten- bzw. Signal-Kommunikation gegeben ist, und / oder mittels des elektronischen Motorsteuergeräts (132) ermittelt wird, ob das elektronische Getriebesteuergerät (110) eine Funktionsbeeinträchtigung aufweist, und / oder mittels des elektronischen Motorsteuergeräts (132) ermittelt wird, ob die Getriebeeinrichtung (102, 106) und / oder die Drehmomentübertragungseinrichtung (114) eine Funktionsbeeinträchtigung aufweist, und / oder mittels des elektronischen Motorsteuergeräts (132) das maximal zulässige Motormoment begrenzt wird und / oder mittels des elektronischen Motorsteuergeräts (132) die Brennkraftmaschine (124) abgeschaltet wird.

5. Verfahren nach einem der vorangehenden Ansprüche, **dadurch gekennzeichnet, dass** das elektronische Getriebesteuergerät (110) bei gegebener und / oder funktionsfähiger Daten- bzw. Signal-Kommunikation zwischen dem elektronischen Getriebesteuergerät (110) und dem elektronischen Motorsteuergerät (132) und / oder bei gegebener Funktionsfähigkeit des elektronischen Getriebesteuergerät (110) und / oder bei gegebener Funktionsfähigkeit der Signalübertragungsstrecke einen Lebendzähler in einer vorbestimmten Weise verändert, wobei das elektronische Motorsteuergerät (132) ermittelt, ob der Lebendzähler in der vorbestimmten Weise verändert wird und dann, wenn der Lebendzähler nicht in der vorbestimmten Weise bzw. nicht korrekt verändert wird, feststellt, dass keine und / oder eine funktionsbeeinträchtigte Daten- bzw. Signal-Kommunikation zwischen dem elektronischen Getriebesteuergerät (110) und dem elektronischen Motorsteuergerät (132) gegeben ist und / oder feststellt, dass das elektronische Getriebesteuergerät (110) und / oder die Signalübertragungsstrecke funktionsbeeinträchtigt, insbesondere ausgefallen, ist.

6. Verfahren nach Anspruch 5, **dadurch gekennzeichnet, dass** der Lebendzähler ein Signal ist, welches einen Zahlenwert repräsentiert und in vorbestimmten Zeitabständen vom elektronischen Getriebesteuergerät an ein CAN-Bus gesendet wird, wobei das jeweils folgende Signal gegenüber dem jeweils vorherigen in einer vorbestimmten Weise verändert ist, wobei das elektronische Motorsteuergerät (132) ermittelt, ob dieses Signal in der vorbestimmten Weise verändert wird und bei Ausbleiben der Veränderung bzw. der gemäß der vorbestimmten Weise korrekten Veränderung feststellt, dass keine bzw. eine funktionsbeeinträchtigte Daten- bzw. Signal-Kommunikation zwischen dem elektronischen Getriebesteuergerät (110) und dem elektronischen Motorsteuergerät (132) gegeben ist und / oder feststellt, dass das elektronische Getriebesteuergerät (110) und / oder die Signalübertragungsstrecke funktionsbeeinträchtigt, insbesondere ausgefallen, ist.

7. Verfahren nach einem der vorangehenden Ansprüche, **dadurch gekennzeichnet, dass** ermittelt wird, ob das elektronische Getriebesteuergerät (110) vorbestimmte Signale an ein CAN-Bus-System (142) sendet, wobei dann, wenn festgestellt wird, dass elektronische Getriebesteuergerät (110) diese vorbestimmten Signale nicht an ein CAN-Bus-System (142) sendet, festgestellt wird, dass keine bzw. eine funktionsbeeinträchtigte Daten- bzw. Signal-Kommunikation zwischen dem elektronischen Getriebesteuergerät (110) und dem elektronischen Motorsteuergerät (132) gegeben ist, und / oder festgestellt wird, dass das elektronische Getriebesteuergerät (110) ausgefallen ist und / oder die Signalübertragungsstrecke ausgefallen ist.

8. Verfahren nach einem der vorangehenden Ansprüche, **dadurch gekennzeichnet, dass** das maximal zulässige Motormoment auf einen oberen Grenzwert, die Motordrehmomentgrenze, begrenzt wird, und dass genau eine Motordrehmomentgrenze zum Begrenzen des maximal zulässigen Motormoments vorgesehen ist.

9. Verfahren nach einem der Ansprüche 1 bis 7, **dadurch gekennzeichnet, dass** das maximal zulässige Motormoment auf einen oberen Grenzwert, die Motordrehmomentgrenze, begrenzt wird, und dass mehrere Motordrehmomentgrenzen zum Begrenzen des maximal zulässigen Motormoments vorgesehen sind.

10. Verfahren nach einem der Ansprüche 8 oder 9, **dadurch gekennzeichnet, dass** die Motormomentgrenze für das maximal zulässige Motormoment bzw. jede Motormomentgrenze für das maximal zulässige Motormoment ein konstanter Wert ist.

11. Verfahren nach einem der Ansprüche 8 oder 9, **dadurch gekennzeichnet, dass** die Motormomentgrenze für das maximal zulässige Motormoment bzw. jede oder wenigstens eine Motormomentgrenze für das maximal zulässige Motormoment ein funktionaler Zusammenhang ist.

12. Verfahren nach einem der Ansprüche 9 bis 11, **dadurch gekennzeichnet, dass** zum Begrenzen des maximal zulässigen Motormoments eine Motormomentgrenze für das maximal zulässige Motormoment aus einer Mehrzahl von vorgegebenen Motormomentgrenzen für das maximal zulässige Motormoment ausgewählt wird, und das maximal zulässige Motormoment gemäß dieser ausgewählten Motormomentgrenze begrenzt wird.

13. Verfahren nach einem der Ansprüche 1 sowie 9 bis 12, **dadurch gekennzeichnet, dass** die Motormomentgrenze für das maximal zulässige Motormoment in Abhängigkeit von der Stellung eines Fahrpedals des Kraftfahrzeuges ausgewählt oder bestimmt wird, und das maximal zulässige Motormoment gemäß dieser ausgewählten bzw. bestimmten Motormoment-Grenze begrenzt wird.

14. Verfahren nach einem der vorangehenden Ansprüche, **dadurch gekennzeichnet, dass** eine Betriebsbremse (140) des Kraftfahrzeuges (100) vorgesehen ist, die ein vorbestimmtes Bremsmoment erzeugen kann, und dass die Motormomentgrenze für das maximal zulässige Motormoment auf einen Wert gesetzt ist, der von diesem Bremsmoment abhängt.

15. Verfahren nach Anspruch 14, **dadurch gekennzeichnet, dass** die Motormomentgrenze für das maximal zulässige Motormoment auf einen Wert gesetzt ist, der kleiner oder gleich dem Quotienten aus dem von der Betriebsbremse (140) erzeugbaren Bremsmoment und der im Antriebsstrang (122) zwischen der Motorausgangswelle und den Antriebsachsen (130) des Kraftfahrzeuges (100) aktuell gegebenen und / oder maximal oder minimal einstellbaren Übersetzung ist.

16. Verfahren nach einem der vorangehenden Ansprüche, **dadurch gekennzeichnet, dass** elektronische Getriebesteuergerät (110) wenigstens ein Signal aussendet, welches anzeigt, ob eine Funktionsbeeinträchtigung der Getriebeeinrichtung (102, 106) und / oder der Drehmomentübertragungseinrichtung (114) gegeben ist, wobei das elektronische Motorsteuergerät (132) zur Ermittlung, ob eine Funktionsbeeinträchtigung in der Drehmomentübertragungseinrichtung (114, 116) und / oder Getriebeeinrichtung (102, 106) bzw. in der die Drehmomentübertragungseinrichtung (114, 116) und / oder Getriebeeinrichtung (102, 106) umfassenden Einheit gegeben ist, dieses Signal überwacht und feststellt, dass eine solche Funktionsbeeinträchtigung gegeben ist, wenn dieses Signal eine Funktionsbeeinträchtigung der Drehmomentübertragungseinrichtung (114, 116) und / oder Getriebeeinrichtung (102, 106) anzeigt.

17. Vorrichtung für ein Sicherheitssystem für ein Kraftfahrzeug (100), wobei diese Vorrichtung elektronische Signale empfangen, aussenden und verarbeiten kann und eine Speichereinrichtung (136) aufweist, in welcher wenigstens ein Steuerungsprogramm (138) gespeichert ist, welches ein Verfahren gemäß einem der vorangehenden Ansprüche steuert.

18. Vorrichtung nach Anspruch 18, **dadurch gekennzeichnet, dass** die Vorrichtung (134) ein elektronisches Motorsteuergerät (132) umfasst, und dieses elektronische Motorsteuergerät (132) elektronische Signale empfangen, aussenden und verarbeiten kann und die Speichereinrichtung (136) aufweist, in welcher wenigstens das Steuerungsprogramm (138) gespeichert ist, welches ein Verfahren gemäß einem der Ansprüche 1 bis 16 steuert.

## Claims

1. Method for controlling a motor vehicle drive train system which has a drive train (122) in which a gearbox device (102, 106) and a torque-transmitting device (114) are arranged, wherein the drive train can be loaded by means of an internal combustion engine (124), as well as an electronic engine control unit (132) for controlling the internal combustion engine (124), and an electronic gearbox control unit (110) for controlling the gearbox device (102, 106) and/or the torque-transmitting device (114), wherein the electronic engine control unit (132) determines, by means of a predetermined characteristic, whether it has lost communication with the electronic gearbox control unit (110), and wherein the electronic engine control unit (132) limits the maximum permissible engine torque if it detects that it has lost communication with the electronic gearbox control unit (110), wherein the torque-transmitting unit (114) is embodied as a clutch device, and the engine torque limit for the maximum permissible engine torque is selected or determined as a function of at least one operating characteristic value of the motor vehicle, and the maximum permissible engine torque is limited in accordance with this selected or determined engine torque limit, **characterized in that** the engine torque limit for the maximum permissible engine torque is selected or determined as a function of the position of a component of the motor vehicle which can be activated by the driver, and the maximum permissible engine torque is limited in accordance with this selected or determined engine torque limit.

2. Method according to Claim 1, **characterized in that** it is determined whether there is data or signal communication or functionally capable data or signal communication between the electronic gearbox control unit (110) and the electronic engine control unit (132), and/or it is determined whether the electronic gearbox control unit (110) has a functional impairment, and/or it is determined whether the gearbox device (102, 106) and/or the torque-transmitting device (114) have/has a functional impairment, wherein the maximum permissible engine torque of the internal combustion engine (124) is limited if it is determined that there is no data or signal communication and/or there is functionally impaired data or signal communication between the electronic gearbox control unit (110) and the electronic engine control unit (132), and/or the maximum permissible engine torque of the internal combustion engine (124) is limited if it is determined that the electronic gearbox control unit (110) has a functional impairment, and/or the maximum permissible engine torque of the internal combustion engine (124) is limited if it is determined that the gearbox device (102, 106) and/or the torque-transmitting device (114) have/has a functional impairment.

3. Method according to Claim 1, **characterized in that** it is determined whether there is data or signal communication or functionally capable data or signal communication between the electronic gearbox control unit (110) and the electronic engine control unit (132), and/or it is determined whether the electronic gearbox control unit (110) has a functional impairment, and/or it is determined whether the gearbox device (102, 106) and/or the torque-transmitting device (114) have/has a functional impairment, wherein the internal combustion engine (124) is switched off if it is determined that there is no data or signal communication and/or there is functionally impaired data or signal communication between the electronic gearbox control unit (110) and the electronic engine control unit (132), and/or the internal combustion engine (124) is switched off if it is determined that the electronic gearbox control unit (110) has a functional impairment, and/or the internal combustion engine (124) is switched off if it is determined that there is a functional impairment in the gearbox device (102, 106) and/or in the torque-transmitting device (114), and if it is additionally detected in each case that the brake (140) of the motor vehicle (100) is activated and/or if it is additionally detected in each case that the vehicle speed is lower than a predetermined limiting speed and/or if it is additionally detected in each case that the engine speed is lower than a predetermined limit and/or if it is additionally detected in each case that the idling controller torque is greater than a predetermined limiting value and/or if it is additionally detected in each case that a selector lever which can be activated by the driver is neither in the parked position nor in the neutral position.

4. Method according to one of Claims 2 and 3, **characterized in that** by means of the electronic engine control unit (132) it is determined whether there is data or signal communication or functionally capable data or signal communication between the electronic gearbox control unit (110) and the electronic engine control unit (132), and/or by means of the electronic engine control unit (132) it is determined whether the electronic gearbox control unit (110) has a functional impairment, and/or by means of the electronic engine control unit (132) it is determined whether the gearbox device (102, 106) and/or the torque-transmitting device (114) has a functional impairment, and/or by means of the electronic engine control unit (132) the maximum permissible engine torque is limited, and/or by means of the electronic engine control unit (132) the internal combustion engine (124) is switched off.

5. Method according to one of the preceding claims, **characterized in that** when there is given and/or functionally capable data or signal communication between the electronic gearbox control unit (110) and the electronic engine control unit (132) and/or when there is given functional capability of the electronic gearbox control unit (110) and/or when there is given functional capability of the signal transmission link the electronic gearbox control unit (110) changes an alive counter in a predetermined way, wherein the electronic engine control unit (132) determines whether the alive counter is changed in the predetermined way, and when the alive counter is not changed in the predetermined way or is not changed correctly said electronic engine control unit (132) detects that there is no data or signal communication and/or there is functionally impaired data or signal communication between the electronic gearbox control unit (110) and the electronic engine control unit (132) and/or detects that the electronic gearbox control unit (110) and/or the signal transmission link are/is functionally impaired, in particular have/has failed.

6. Method according to Claim 5, **characterized in that** the alive counter is a signal which represents a numerical value and is transmitted from the electronic gearbox control unit to a CAN bus at predetermined time intervals, wherein the respectively following signal is changed in comparison with the respectively preceding signal in a predetermined way, wherein the electronic engine control unit (132) determines whether this signal is changed in the predetermined way, and when the change fails to occur or the change which is correct according to the predetermined way fails to occur said electronic control unit (132) detects that there is no data or signal communication or there is functionally impaired data or signal communication between the electronic gearbox control unit (110) and the electronic engine control unit (132), and/or detects that the electronic gearbox control unit (110) and/or the signal transmission link are/is functionally impaired, in particular have/has failed.

7. Method according to one of the preceding claims, **characterized in that** it is determined whether the electronic gearbox control unit (110) transmits predetermined signals to a CAN bus system (142), wherein if it is detected that the electronic gearbox control unit (110) does not transmit these predetermined signals to a CAN bus system (142), it is then detected that there is no data or signal communication or there is functionally impaired data or signal communication between the electronic gearbox control unit (110) and the electronic engine control unit (132) and/or it is detected that the electronic gearbox control unit (110) has failed and/or the signal transmission link has failed.

8. Method according to one of the preceding claims, **characterized in that** the maximum permissible engine torque is limited to an upper limiting value, the engine torque limit, and **in that** precisely one engine torque limit is provided for limiting the maximum permissible engine torque.

9. Method according to one of Claims 1 to 7, **characterized in that** the maximum permissible engine torque is limited to an upper limiting value, the engine torque limit, and **in that** a plurality of engine torque limits are provided for limiting the maximum permissible engine torque.

10. Method according to one of Claims 8 and 9, **characterized in that** the engine torque limit for the maximum permissible engine torque, or each engine torque limit for the maximum permissible engine torque, is a constant value.

11. Method according to one of Claims 8 and 9, **characterized in that** the engine torque limit for the maximum permissible engine torque, or each or at least one engine torque limit for the maximum permissible engine torque, is a functional relationship.

12. Method according to one of Claims 9 to 11, **characterized in that**, in order to limit the maximum permissible engine torque, an engine torque limit for the maximum permissible engine torque is selected from a multiplicity of predefined engine torque limits for the maximum permissible engine torque, and the maximum permissible engine torque is limited in accordance with this selected engine torque limit.

13. Method according to one of Claims 1, 9 to 12, **characterized in that** the engine torque limit for the maximum permissible engine torque is selected or determined as a function of the position of an accelerator pedal of the motor vehicle, and the maximum permissible engine torque is limited in accordance with this selected or determined engine torque limit.

14. Method according to one of the preceding claims, **characterized in that** a service brake (140) of the motor vehicle (100) is provided which can generate a predetermined engine torque, and **in that** the engine torque limit for the maximum permissible engine torque is set to a value which depends on this engine torque.

15. Method according to Claim 14, **characterized in that** the engine torque limit for the maximum permissible engine torque is set to a value which is less than or equal to the quotient of the engine torque which can be generated by the service brake (140) and the transmission ratio which is present at a given time, and/or is the maximum or minimum transmission ratio which can be set, in the drive train (122) between the engine output shaft and the drive axles (130) of the motor vehicle (100).

16. Method according to one of the preceding claims, **characterized in that** the electronic gearbox control unit (110) emits at least one signal which indicates whether there is a functional impairment of the gearbox device (102, 106) and/or of the torque-transmitting device (114), wherein, in order to determine whether there is a functional impairment in the torque-transmitting device (114, 116) and/or gearbox device (102, 106) or in the unit comprising the torque-transmitting device (114, 116) and/or gearbox device (102, 106), the electronic engine control unit (132) monitors this signal and detects that there is such a functional impairment if this signal indicates a functional impairment of the torque-transmitting device (114, 116) and/or gearbox device (102, 106).

17. Device for a safety system for a motor vehicle (100), wherein this device can receive, emit and process electronic signals and has a memory device (136) in which at least one control program (138), which controls a method according to one of the preceding claims, is stored.

18. Device according to Claim 18, **characterized in that** the device (134) comprises an electronic engine control unit (132), and this electronic engine control unit (132) can receive, emit and process electronic signals and has the memory device (136) in which at least the control program (138), which controls a method according to one of Claims 1 to 16, is stored.

## Revendications

1. Procédé de commande d'un système de traction d'un véhicule automobile, qui présente une chaîne cinématique (122) dans laquelle est disposé un dispositif de transmission (102, 106) et un dispositif de transfert de couple (114), la chaîne cinématique pouvant être sollicitée au moyen d'un moteur à combustion interne (124), ainsi qu'un appareil de commande de moteur électronique (132) pour la commande du moteur à combustion interne (124) et un appareil de commande de transmission électronique (110) pour la commande du dispositif de transmission (102, 106) et/ou du dispositif de transfert de couple (114), l'appareil de commande de moteur électronique (132) déterminant au moyen d'une caractéristique prédéterminée s'il a perdu la communication avec l'appareil de commande de transmission électronique (110), et l'appareil de commande de moteur électronique (132) limitant le couple moteur maximal admissible lorsqu'il constate qu'il a perdu la communication avec l'appareil de commande de transmission électronique (110), l'unité de transfert de couple (114) étant réalisée sous forme de dispositif d'embrayage et la limite de couple du moteur pour le couple moteur maximal admissible étant sélectionnée ou déterminée en fonction d'au moins une valeur caractéristique de fonctionnement du véhicule automobile, et le couple moteur maximal admissible étant limite en fonction de cette limite de couple moteur sélectionnée ou déterminée, **caractérisé en ce que** la limite de couple moteur pour le couple moteur maximal admissible est sélectionnée ou déterminée en fonction de la position d'un composant du véhicule automobile qui peut être actionné par le conducteur, et le couple moteur maximal admissible est limité en fonction de cette limite de couple moteur sélectionnée ou déterminée.

2. Procédé selon la revendication 1, **caractérisé en ce que** l'on détermine si une communication de données ou de signaux ou une communication de données ou de signaux fonctionnelle existe ou est déterminée entre l'appareil de commande de transmission électronique (110) et l'appareil de commande de moteur électronique (132), si l'appareil de commande de transmission électronique (110) présente un fonctionnement altéré et/ou l'on détermine si le dispositif de transmission (102, 106) et/ou le dispositif de transfert de couple (114) présente un fonctionnement altéré, le couple moteur maximal admissible du moteur à combustion interne (124) étant limité s'il est déterminé qu'il n'y a pas de communication de données ou de signaux ou qu'il y a une communication de données ou de signaux de fonctionnement altéré entre l'appareil de commande de transmission électronique (110) et l'appareil de commande de transmission électronique (132) et/ou le couple moteur maximal admissible du moteur à combustion interne (124) étant limité s'il est déterminé que l'appareil de commande de transmission électronique (110) présente un fonctionnement altéré et/ou le couple moteur maximal admissible du moteur à combustion interne (124) est limité s'il est déterminé que le dispositif de transmission (102, 106) et/ou le dispositif de transfert de couple (114) présente un fonctionnement altéré.

3. Procédé selon la revendication 1, **caractérisé en ce que** l'on détermine si une communication de données ou de signaux ou une communication de données ou de signaux fonctionnelle existe ou est déterminée entre l'appareil de commande de transmission électronique (110) et l'appareil de commande de moteur électronique (132), si l'appareil de commande de transmission électronique (110) présente un fonctionnement altéré et/ou l'on détermine si le dispositif de transmission (102, 106) et/ou le dispositif de transfert de couple (114) présente un fonctionnement altéré, le moteur à combustion interne (124) étant coupé s'il est déterminé qu'il n'y a pas de communication de données ou de signaux ou qu'il y a une communication de données ou de signaux de fonctionnement altéré entre l'appareil de commande de transmission électronique (110) et l'appareil de commande de transmission électronique (132) et/ou le moteur à combustion interne (124) est coupé s'il est déterminé que l'appareil de commande de transmission électronique (110) présente un fonctionnement altéré et/ou le moteur à combustion interne (124) est coupé s'il est déterminé qu'il y a un fonctionnement altéré dans le dispositif de transmission (102, 106) et/ou dans le dispositif de transfert de couple (114), et si l'on constate en outre à chaque fois que le frein (140) du véhicule automobile (100) est actionné et/ou si l'on constate en outre à chaque fois que la vitesse du véhicule est inférieure à une vitesse limite prédéterminée et/ou si l'on constate en outre à chaque fois que le régime du moteur est inférieur à une limite prédéterminée et/ou si l'on constate en outre à chaque fois que le couple de réglage de ralenti est supérieur à une valeur limite prédéterminée et/ou si l'on constate en outre à chaque fois qu'un levier de sélection pouvant être actionné par le conducteur n'est ni dans la position de stationnement ni dans la position neutre.

4. Procédé selon l'une quelconque des revendications 2 ou 3, **caractérisé en ce que** l'on détermine au moyen de l'appareil de commande de moteur électronique (132) s'il existe entre l'appareil de commande de transmission électronique (110) et l'appareil de commande de moteur électronique (132) une communication de données ou de signaux ou une communication de données ou de signaux fonctionnelle et/ou l'on détermine au moyen de l'appareil de commande de moteur électronique (132) si l'appareil de commande de transmission (110) présente un fonctionnement altéré et/ou l'on détermine au moyen de l'appareil de commande de moteur électronique (132) si le dispositif de transmission (102, 106) et/ou le dispositif de transfert de couple (114) présente un fonctionnement altéré et/ou le couple moteur maximal admissible est limité au moyen de l'appareil de commande de moteur électronique (132) et/ou le moteur à combustion interne (124) est coupé au moyen de l'appareil de commande de moteur électronique (132).

5. Procédé selon l'une quelconque des revendications précédentes, **caractérisé en ce que** l'appareil de commande de transmission électronique (110), en cas de communication de données et/ou de signaux donnée et/ou fonctionnelle entre l'appareil de commande de transmission électronique (110) et l'appareil de commande de moteur électronique (132) et/ou en cas de fonctionnalité donnée de l'appareil de commande de transmission électronique (110) et/ou en cas de fonctionnalité donnée de la section de transfert de signaux, modifie un compteur de vie de manière prédéterminée, l'appareil de commande de moteur électronique (132) déterminant si le compteur de vie est modifié de la manière prédéterminée et si le compteur de vie n'est pas modifié de la manière prédéterminée ou correcte, établit qu'aucune communication de données ou de signaux de fonctionnement altéré n'existe entre l'appareil de commande de transmission électronique (110) et l'appareil de commande de moteur électronique (132), et/ou établit que l'appareil de commande de transmission électronique (110) et/ou la section de transfert de signaux fonctionne de manière altérée, notamment est en panne.

6. Procédé selon la revendication 5, **caractérisé en ce que** le compteur de vie est un signal qui représente une valeur numérique et qui est envoyé à intervalles de temps prédéterminés de l'appareil de commande de transmission électronique à un bus CAN, le signal respectif suivant étant modifié par rapport au signal respectif précédent de manière prédéterminée, l'appareil de commande de moteur électronique (132) déterminant si ce signal est modifié de la manière prédéterminée et en l'absence de la modification ou de la modification correcte selon la manière prédéterminée, établissant qu'il n'y a pas de communication de données ou de signaux, ou une communication de données ou de signaux de fonctionnement altéré entre l'appareil de commande de transmission électronique (110) et l'appareil de commande de moteur électronique (132), et/ou établissant que l'appareil de commande de transmission électronique (110) et/ou la section de transfert de signaux a un fonctionnement altéré, en particulier est en panne.

7. Procédé selon l'une quelconque des revendications précédentes, **caractérisé en ce que** l'on détermine si l'appareil de commande de transmission électronique (110) envoie des signaux prédéterminés à un système de bus CAN (142), et s'il est constaté que l'appareil de commande de transmission électronique (110) n'envoie pas ces signaux prédéterminés à un système de bus CAN (142), il est établi qu'aucune communication de données ou de signaux, ou une communication de données ou de signaux de fonctionnement altéré, existe entre l'appareil de commande de transmission électronique (110) et l'appareil de commande de moteur électrique (132), et/ou il est établi que l'appareil de commande de transmission électronique (110) est en panne et/ou que la section de transfert de signaux est en panne.

8. Procédé selon l'une quelconque des revendications précédentes, **caractérisé en ce que** le couple moteur maximal admissible est limité à une valeur limite supérieure, la limite de couple moteur, et **en ce qu'**une limite de couple moteur est exactement prévue pour limiter le couple moteur maximal admissible.

9. Procédé selon l'une quelconque des revendications 1 à 7, **caractérisé en ce que** le couple moteur maximal admissible est limité à une valeur limite supérieure, la limite de couple moteur, et **en ce que** plusieurs limites de couple moteur sont prévues pour la limitation du couple moteur maximal admissible.

10. Procédé selon l'une quelconque des revendications 8 ou 9, **caractérisé en ce que** la limite de couple moteur pour le couple moteur maximal admissible ou chaque limite de couple moteur pour le couple moteur maximal admissible est une valeur constante.

11. Procédé selon l'une quelconque des revendications 8 ou 9, **caractérisé en ce que** la limite de couple moteur pour le couple moteur maximal admissible ou chaque ou au moins une limite de couple moteur pour le couple moteur maximal admissible est un rapport fonctionnel.

12. Procédé selon l'une quelconque des revendications 9 à 11, **caractérisé en ce que** pour la limitation du couple moteur maximal admissible, une limite de couple moteur pour le couple moteur maximal admissible est sélectionnée à partir d'une pluralité de limites de couple moteur prédéfinies pour le couple moteur maximal admissible, et le couple moteur maximal admissible est limité en fonction de cette limite de couple moteur sélectionnée.

13. Procédé selon l'une quelconque des revendications 1 et 9 à 12, **caractérisé en ce que** la limite de couple moteur pour le couple moteur maximal admissible est sélectionnée ou déterminée en fonction de la position d'une pédale d'accélérateur du véhicule automobile, et le couple moteur maximal admissible est limité en fonction de cette limite de couple moteur sélectionnée ou déterminée.

14. Procédé selon l'une quelconque des revendications précédentes, **caractérisé en ce qu'**un frein de service (140) du véhicule automobile (100) est prévu, lequel peut générer un couple de freinage prédéterminé, et **en ce que** la limite de couple moteur pour le couple moteur maximal admissible est fixée à une valeur qui dépend de ce couple de freinage.

15. Procédé selon la revendication 14, **caractérisé en ce que** la limite de couple moteur pour le couple moteur maximal admissible est fixée à une valeur qui est inférieure ou égale au quotient du couple de freinage pouvant être produit par le frein de service (140) et le rapport de transmission (122) actuellement donné et/ou ajustable au maximum ou au minimum entre l'arbre de sortie du moteur et les essieux moteurs (130) du véhicule automobile (100).

16. Procédé selon l'une quelconque des revendications précédentes, **caractérisé en ce que** l'appareil de commande de transmission électronique (110) envoie au moins un signal qui indique si un fonctionnement altéré du dispositif de transmission (102, 106) et/ou du dispositif de transfert de couple (114) existe, l'appareil de commande de moteur électronique (132), pour déterminer s'il existe un fonctionnement altéré dans le dispositif de transfert de couple (114, 116) et/ou dans le dispositif de transmission (102, 106) ou dans l'unité comprenant le dispositif de transfert de couple (114, 116) et/ou le dispositif de transmission (102, 106), surveillant ce signal et établissant qu'un tel fonctionnement altéré a lieu lorsque ce signal indique un fonctionnement altéré du dispositif de transfert de couple (114, 116) et/ou du dispositif de transmission (102, 106).

17. Dispositif pour un système de sécurité pour un véhicule automobile (100), dans lequel ce dispositif peut recevoir, envoyer et traiter des signaux électroniques, et présente un dispositif de mémoire (136), dans lequel est mémorisé au moins un programme de commande (138) qui commande un procédé selon l'une quelconque des revendications précédentes.

18. Dispositif selon la revendication 18, **caractérisé en ce que** le dispositif (134) comprend un appareil de commande de moteur électronique (132) et cet appareil de commande de moteur électronique (132) peut recevoir, envoyer et traiter des signaux électroniques et présente le dispositif de mémoire (136), dans lequel au moins le programme de commande (138) est mémorisé, lequel programme de commande commande un procédé selon l'une quelconque des revendications 1 à 16.
